# EUROPEAN PATENT APPLICATION

(11) **EP 2 529 625 A1**
(43) Date of publication of application: **05.12.2012**
(21) Application number: 11737054.4
(22) Date of filing: 26.01.2011
(51) Int. Cl.: A01N 59/00, A01C 1/00, A01N 25/00, A01N 25/02, A01N 59/02, A01P 21/00

(54) **AGENT FOR IMPROVING PLANT GROWTH, SEEDS, AND METHOD FOR IMPROVING PLANT GROWTH**

(30) Priority: 18.08.2010 JP 2010183071; 26.01.2010 JP 2010014471
(71) Applicant: Incorporated Administrative Agency National Agriculture and Food Research Organization, Ibaraki 305-8517 (JP)
(72) Inventor: HARA, Yoshitaka, Chikugo, Fukuoka 833-0041 (JP)
(74) Representative: Graf von Stosch, Andreas
(86) International application number: PCT/JP2011/051500
(87) International publication number: WO 2011/093341

(57) **Abstract**

The present invention relates to (i) a plant growth-improving agent containing a growth-improving component that increases a concentration of an oxoanion in an area around a plant, the oxoanion being heavier than a sulfate ion and containing four oxygen atoms, (ii) a seed to which such a plant growth-improving agent has been applied, and (iii) a plant growth-improving method including a cultivating step of growing a plant in the presence of such a growth-improving component.

## Description

### Technical Field

The present invention relates to a plant growth-improving agent, a seed, and a method for improving plant growth.

### Background Art

Rice is one of the world's three major cereal crops. In Japan, rice is an important crop that occupies the largest portion of the cropping acreage in the country. In Japan today, rice cropping is typically performed by planting seeds into seedling-raising boxes, growing seedlings from the seeds, and planting the seedlings in rice fields, thus requiring higher cost than in foreign countries, so there has been a demand for a reduction in cost. Further, in step with the aging of the farming population, there has also been a demand for laborsaving. Thus, from the point of view of reducing the cost of and saving the labor of rice cropping, direct seeding has been attracting attention. Direct seeding is the direct planting of rice seeds in rice fields.

Direct seeding is classified into direct seeding in well-drained paddy field and direct seeding in submerged paddy field. Direct seeding in well-drained paddy field is the planting of seeds in a paddy field whose soil is not submerged and has a low water content, and direct seeding in submerged paddy field is the planting of seeds in a paddy field after submergence and soil puddling. In the case of direct seeding in well-drained paddy field, seedling establishment is stable. In the case of direct seeding in submerged paddy field, however, seedling establishment tends to be unstable. Such growth insufficiency in submerged soil is generally believed to be caused by lack of oxygen. Moreover, Non-patent Literature 1 says that such growth insufficiency in submerged soil is caused by soil reduction in which after oxygen in soil has been depleted, a substance that gains an electron starts to be consumed instead of oxygen. Furthermore, Non-patent Literature 1 says that among some phenomena that are brought about by soil reduction, such growth insufficiency in the case of direct seeding is considered to be caused mainly by organic acids and divalent iron that are produced by soil reduction.

For amelioration of such growth insufficiency as that seen in the case of direct seeding, a method of direct seeding in submerged paddy field has been provided which inhibits lack of oxygen in seeds and soil reduction by coating the surface of each seed with an oxygen generating agent or the like before seeding, and which thereby improves seedling establishment (Non-patent Literature 2). Alternatively, with no more attempt to plant seeds in submerged soil, a method of direct seeding for planting, on the surface of submerged soil, seeds coated with iron or the like for avoidance of bird injury and floating has become more and more widely used (Patent Literature 1). Thus, in the case of direct seeding in submerged paddy field, whether it involves the coating of seeds with an oxygen generating agent or the topsoil seeding of iron-coated seeds, seedling establishment is stabilized by draining the water from the rice field after seeding (Non-patent Literature 2).

### Citation List

Patent Literature 1
   Japanese Patent Application Publication, Tokukai, No. 2005-192458 (Publication Date: July 21, 2005)
Non-patent Literature 1
   Hagiwara, M., Ishikawa Agricultural College Special Research Report No. 20, "Research of Germination and Seedling Establishment of Paddy Rice Directly Planted in Submerged Soil", March 1993
Non-patent Literature 2
   Material 1 for the 9th Study Meeting of the Ministry of Agriculture, Forestry and Fisheries of Japan, "Present State of Techniques of Direct Seeding of Rice", p. 13, March 2003 (http://www.maff.go.jp/j/study/kome_sys/09/pdf/data1.pdf)

### Summary of Invention

### Technical Problem

Direct seeding in well-drained paddy field gives stable seedling establishment, but can only be performed in a paddy field that stores water even without soil puddling. Further, direct seeding in well-drained paddy field tends to let the water and the fertilizer go away and let weeds grow thickly, and cannot be performed when it continues to rain. Since direct seeding in well-drained paddy field tends to let the fertilizer component flow away, it also causes overabundance of nutrients in the surrounding environment.

Further, the method of direct seeding in submerged paddy field that involves the coating of seeds with an oxygen generating agent causes increase in cost and labor. As stated in Patent Literature 1, the method for planting iron-coated seeds on the surface of soil has a risk that the seeds would sink in the soil, with the result that seedling establishment is not achieved. Furthermore, whether in the case of the method that involves the use of seeds coated with an oxygen generating agent or the case of the method that involves the use of seeds coated with iron, it is necessary, for the purpose of ensuring seedling establishment of the seeds, to drain the water (make the water flow away from the paddy field and to dry the soil) so that the seeds can easily survive. This also gives favorable conditions for survival of weeds and therefore requires weeding or spraying of an expensive selective herbicide, thus making it difficult to achieve a reduction in cost or laborsaving. Further, since drainage of water causes the fertilizer component to flow away together with the water, the fertilizer is wasted and also causes overabundance of nutrients in the surrounding environment. Furthermore, drainage of water cannot be performed when it continues to rain, but it is around the rainy season that paddy rice is planted.

Therefore, there has been a demand for the development of a technique that makes it possible to avoid such problems as increase in cost and labor of coating seeds, increase in cost of fertilizer to be applied in more than the usual amount in anticipation of a portion of the fertilizer that flows away, increase in burden on the environment, and dependency on the herbicides, and to cultivate plants without undermining the growth of the plants.

The present invention has been made in view of the foregoing problems, and it is an object of the present invention to provide a plant growth-improving agent that improves plant growth, a seed to which such a plant growth-improving agent has been applied, and a method for improving plant growth.

### Solution to Problem

In order to solve the foregoing problems, the inventor of the present invention searched for a reason why seeds planted in soil do not establish their seedlings. In the result, the inventor of the present invention found that it is not lack of oxygen or soil reduction, in which a substitute substance for oxygen is consumed, per se that causes plant growth insufficiency. Specifically, the inventor of the present invention found that as a result of remarkable progression of soil reduction in the vicinity of seeds, microorganisms in the soil produce sulfide ions from sulfate ions and the resulting sulfide ions bring about an obstacle to the seeds, and that this obstacle is a main reason why the seeds do not establish their seedlings well. Then, after studying a method for inhibiting microorganisms from producing sulfide ions, the inventor of the present invention accomplished the present invention. It has conventionally been believed that such soil reduction as to produce sulfide ions does not occur during a sowing season in early spring when temperatures are low, and these findings discovered by the inventors of the present invention have been denied by Non-patent Literature 1 and the like, which say that sulfides are not a main reason for decreased seedling establishment. Under such circumstances, no research has recently been conducted which puts sulfide ions under suspicion of being a main reason for decreased seedling establishment.

A plant growth-improving agent according to the present invention contains a growth-improving component that increases a concentration of an oxoanion in an area around a plant, the oxoanion being heavier than a sulfate ion and containing four oxygen atoms.

It is preferable that in the plant growth-improving agent according to the present invention, the growth-improving component be selected from the group consisting of a molybdenum-containing substance, a tungsten-containing substance, a chromium-containing substance, a selenium-containing substance, and a tellurium-containing substance, each of which supplies an oxoanion. Further, it is preferable that the growth-improving component be selected from the group consisting of a molybdenum compound, a tungsten compound, a chromium compound, a selenium compound, and a tellurium compound, each of which supplies an oxoanion. Furthermore, in some cases, it is preferable that the growth-improving component be slightly soluble in water. Further, it is more preferable that the growth-improving component be a molybdenum compound or a tungsten compound.

Furthermore, it is preferable that the plant growth-improving agent according to the present invention be used for the plant, the plant being a plant that is cultivated under such conditions that at least part of its body is at least temporarily submerged. Further, it is preferable that the plant growth-improving agent according to the present invention be used for the plant, the plant being a poaceous plant. Further, it is preferable that the plant growth-improving agent according to the present invention serves to improve seedling establishment of the plant (i.e., be a seedling establishment improving agent).

A seed according to the present invention is a seed onto a surface of which or into an inner part of which any one of the aforementioned plant growth-improving agents has been applied.

A method according to the present invention for improving plant growth includes a cultivating step of growing a plant in the presence of a growth-improving component that increases a concentration of an oxoanion in an area around the plant, the oxoanion being heavier than a sulfate ion and containing four oxygen atoms.

It is preferable that in the method according to the present invention for improving plant growth, the growth-improving component be selected from the group consisting of a molybdenum-containing substance, a tungsten-containing substance, a chromium-containing substance, a selenium-containing substance, and a tellurium-containing substance, each of which supplies an oxoanion. Further, in some cases, it is preferable that the growth-improving component be selected from the group consisting of a molybdenum compound, a tungsten compound, a chromium compound, a selenium compound, and a tellurium compound, each of which supplies an oxoanion.

Furthermore, it is preferable that in the method according to the present invention for improving plant growth, the growth-improving component be made present by adding any one of the aforementioned plant growth-improving agents to a solution in which the plant is grown, to a soil in which the plant is grown, to a substitute for the solution, or to a substitute for the soil.

Further, it is preferable that in the method according to the present invention for improving plant growth, the plant growth-improving agent be made present in the solution, a solution of the soil, a solution of the substitute for the solution, or a solution of the substitute for the soil in a range of 0.01 mM to 10 mM in terms of an oxoanion being heavier than a sulfate ion and containing four oxygen atoms.

Further, it is preferable that in the method according to the present invention for improving plant growth, when a oxidation-reduction potential as normalized at pH of 7 is at least temporarily 0 mV or lower in at least part of the solution, the soil, the substitute for the solution, or the substitute for the soil, the plant growth-improving agent be added to the solution, the soil, the substitute for the solution, or the substitute for the soil.

Further, it is preferable that the method according to the present invention for improving plant growth further include a seeding step of planting the aforementioned seed in a solution in which the plant is grown, in a soil in which the plant is grown, in a substitute for the solution, or in a substitute for the soil, the seeding step being executed prior to the cultivating step, the growth-improving component being made present in the seeding step.

Furthermore, it is preferable that in the method according to the present invention for improving plant growth, the cultivating step be executed in at least either a period of seedling establishment or a period of time in which at least part of a body of the plant is temporarily submerged. The clause "at least part of a body of the plant is temporarily submerged" here is a concept that encompasses "a root system of the plant is submerged". Further, the clause "a root system of the plant is submerged" intended to mean that the root system is placed in a excessively moist condition for a certain period of time to such an extent that the healthy growth of the plant is hindered, regardless of whether or not the surface of the soil or the surface of the substitute for the soil is submerged. This method is intended for use as a seedling establishment improving agent, a root rot preventing agent, or a wet damage preventing/reducing agent.

Further, a method according to the present invention for improving plant growth includes the step of adding, to a solution in which a plant is grown, to a soil in which the plant is grown, to a substitute for the solution, or to a substitute for the soil, a material that generates or solubilizes an oxoanion from a molybdenum-containing substance, a tungsten-containing substance, a chromium-containing substance, a selenium-containing substance, or a tellurium-containing substance contained in the solution, in the soil, in a the substitute for the solution, or in the substitute for the soil. It should be noted that the step of adding the material may be executed on a solution in which a plant is being grown, a soil in which the plant is being grown, a substitute for the solution, or a substitute for the soil, or may be executed on a solution in which a plant is yet to be grown, a soil in which the plant is yet to be grown, a substitute for the solution, or a substitute for the soil.

### Advantageous Effects of Invention

A plant growth-improving agent according to the present invention contains a growth-improving component that increases a concentration of an oxoanion in an area around a plant, the oxoanion being heavier than a sulfate ion and containing four oxygen atoms. Therefore, the plant growth-improving agent according to the present invention makes it possible to improve plant growth.

### Brief Description of Drawings

Fig. 1

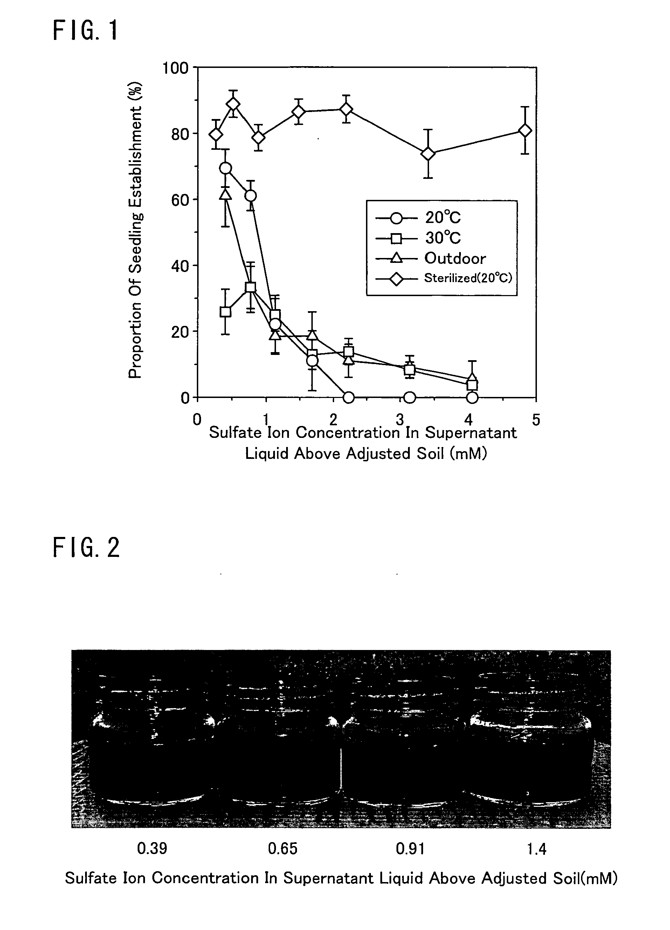

   Fig. 1 is a graph showing an effect of sulfate ions, which serve as a substrate for sulfide ions, on seedling establishment of paddy rice.
Fig. 2
   Fig. 2 shows a relationship between concentrations of sulfate ions, which serve as a substrate for sulfide ions, and blackening of areas around paddy seeds.
Fig. 3

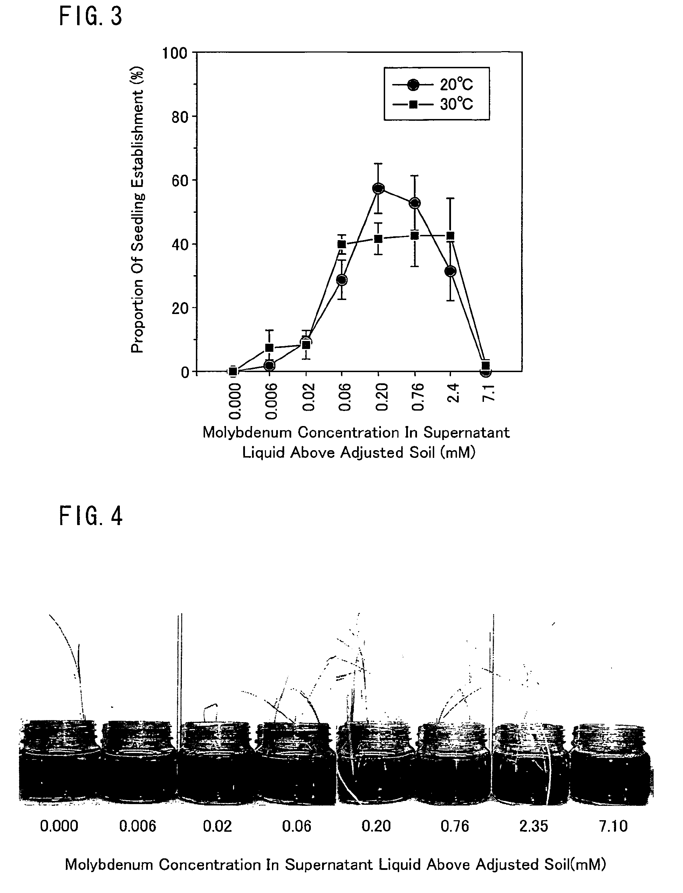

   Fig. 3 is a graph showing an effect that addition of a molybdenum compound to soil has on seedling establishment of paddy rice.
Fig. 4
   Fig. 4 is a graph showing an effect that addition of a molybdenum compound to soil has on sulfide ion generation and on seedling establishment of paddy rice.
Fig. 5

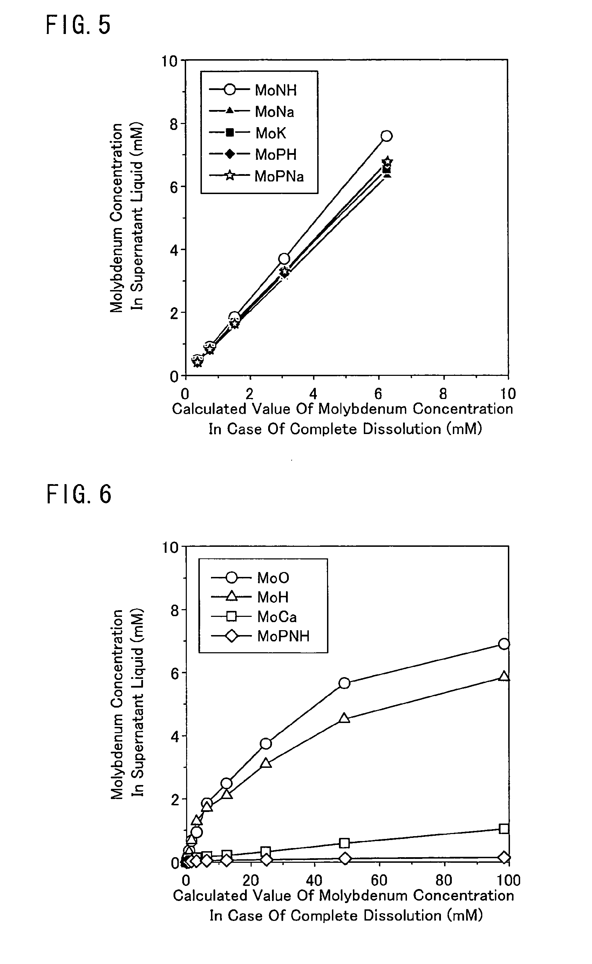

   Fig. 5 is a graph showing the solubility of various readily-soluble molybdenum compounds.
Fig. 6
   Fig. 6 is a graph showing the solubility of various slightly-soluble molybdenum compounds.
Fig. 7

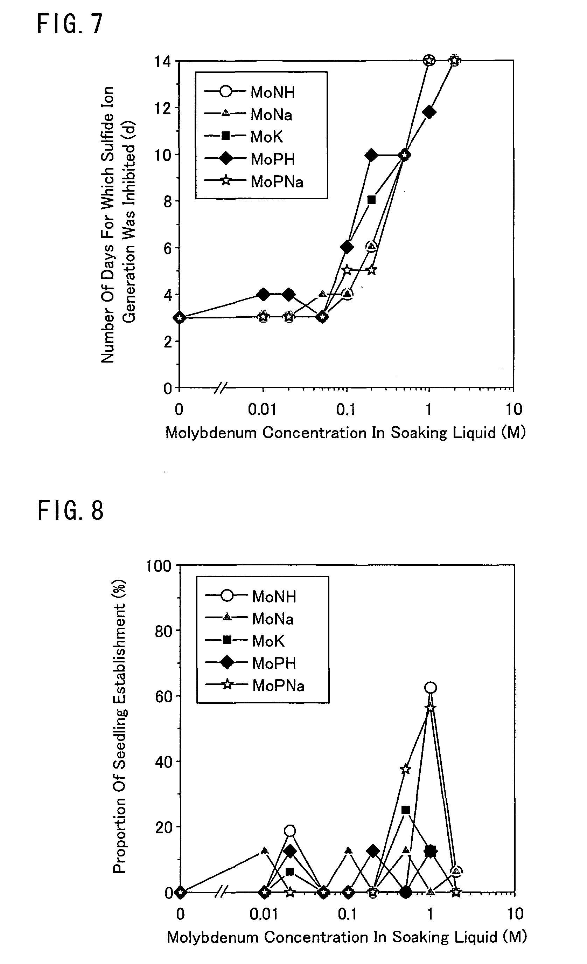

   Fig. 7 is a graph showing an inhibiting effect on sulfide ion generation, as observed in the case of paddy seeds soaked in solutions of various readily-soluble molybdenum compounds.
Fig. 8
   Fig. 8 is a graph showing an improving effect on seedling establishment of plants grown from paddy seeds soaked in solutions of various readily-soluble molybdenum compounds.
Fig. 9

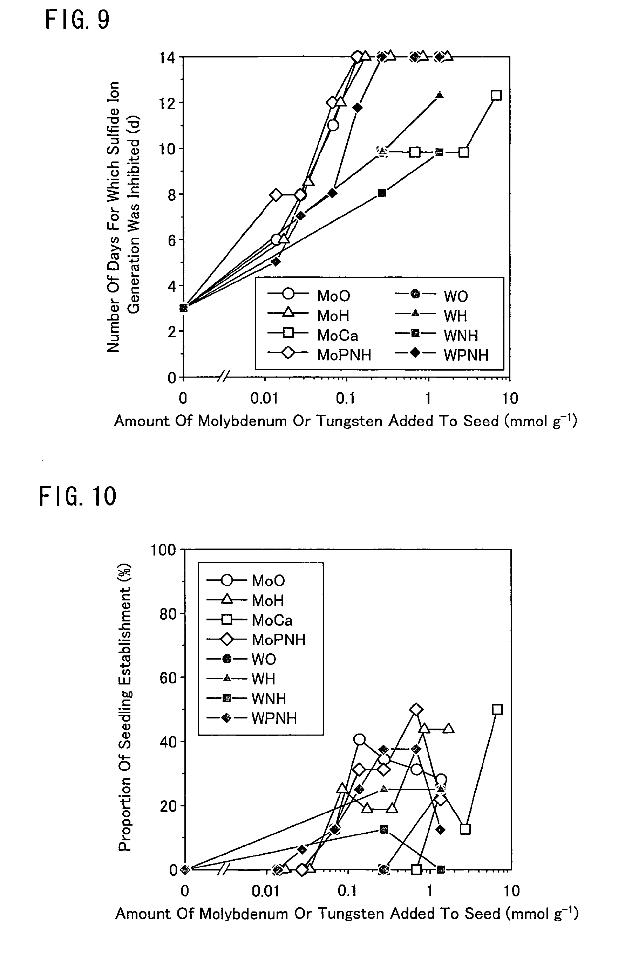

   Fig. 9 is a graph showing an inhibiting effect on sulfide ion generation, as observed in the case of paddy seeds to which various slightly-soluble molybdenum or tungsten compounds were added.
Fig. 10
   Fig. 10 is a graph showing an improving effect on seedling establishment of paddy seeds to which various slightly-soluble molybdenum or tungsten compounds were added.
Fig. 11

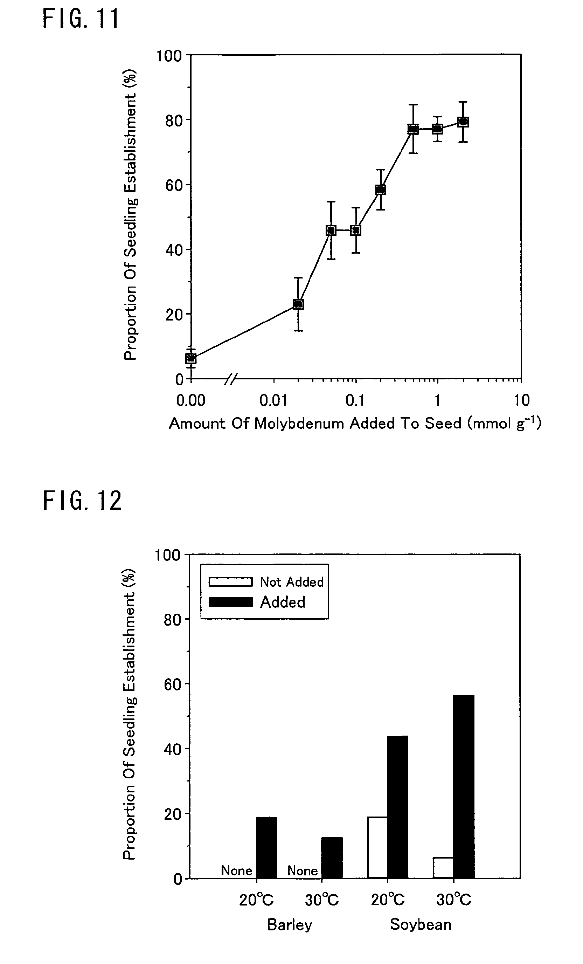

   Fig. 11 is a graph showing an improving effect on seedling establishment of paddy seeds to which ammonium molybdophosphate (ammonium phosphomolybdate) was added.
Fig. 12
   Fig. 12 is a graph showing an improving effect on seedling establishment of barley and soybean seeds to which ammonium molybdophosphate was added.
Fig. 13

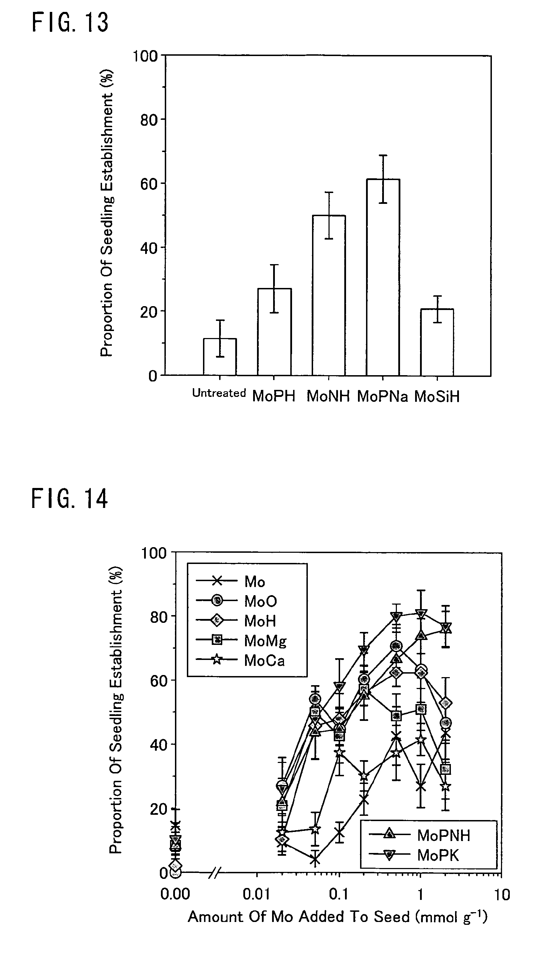

   Fig. 13 is a graph showing an improving effect on seedling establishment of paddy seeds soaked in solutions of various molybdenum-containing substances (molybdenum compounds).
Fig. 14
   Fig. 14 is a graph showing an improving effect on seedling establishment of paddy seeds to which various molybdenum-containing substances (elemental molybdenum or molybdenum compounds) were added.
Fig. 15a

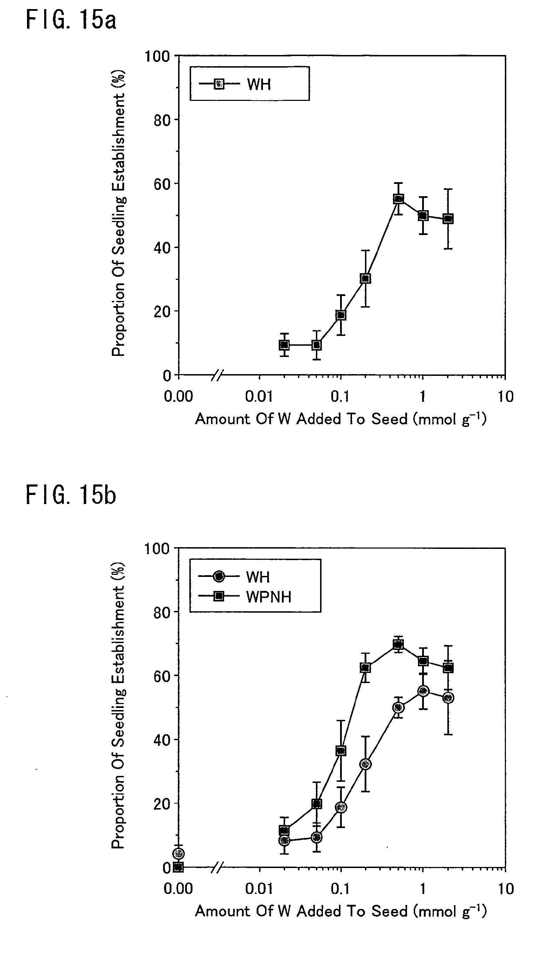

   Fig. 15a is a graph showing an improving effect on seedling establishment of paddy seeds to which tungstic acid was added.
Fig. 15b
   Fig. 15b is a graph showing an improving effect on seedling establishment of paddy seeds to which various tungsten-containing substances (tungsten compounds) were added.
Fig. 16

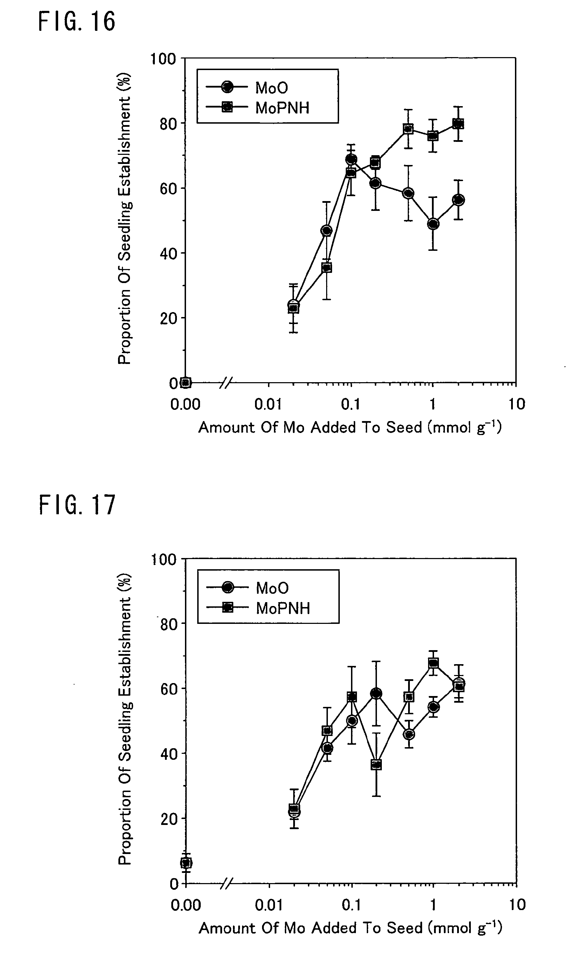

   Fig. 16 is a graph showing an improving effect on seedling establishment of paddy seeds to which various molybdenum-containing substances (molybdenum compounds) were added.
Fig. 17
   Fig. 17 is another graph showing an improving effect on seedling establishment of paddy seeds to which various molybdenum-containing substances (molybdenum compounds) were added.
Fig. 18

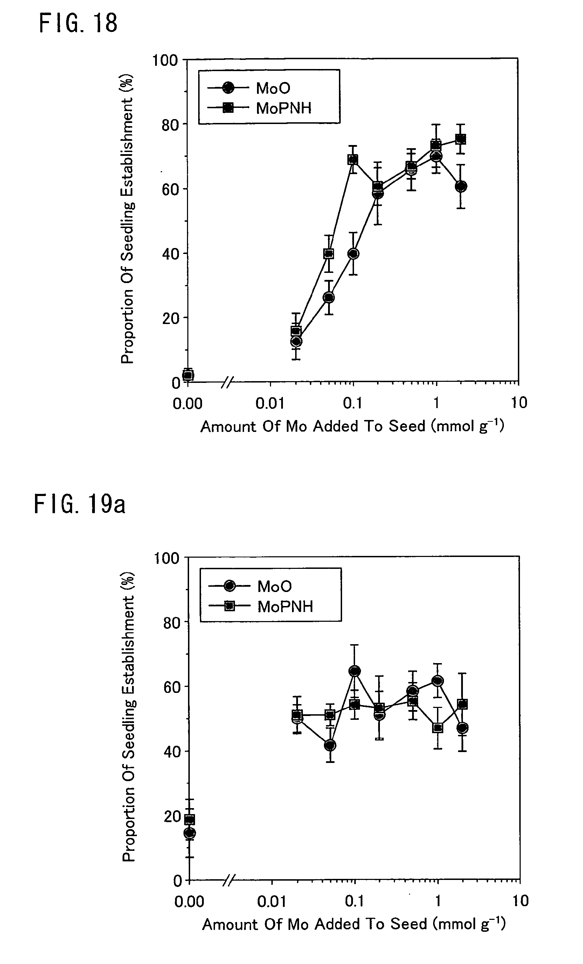

   Fig. 18 is still another graph showing an improving effect on seedling establishment of paddy seeds to which various molybdenum-containing substances (molybdenum compounds) were added.
Fig. 19a
   Fig. 19a is a graph showing an improving effect on seedling establishment of paddy seeds to which mixtures of various molybdenum-containing substances (molybdenum compounds) and clay were added.
Fig. 19b

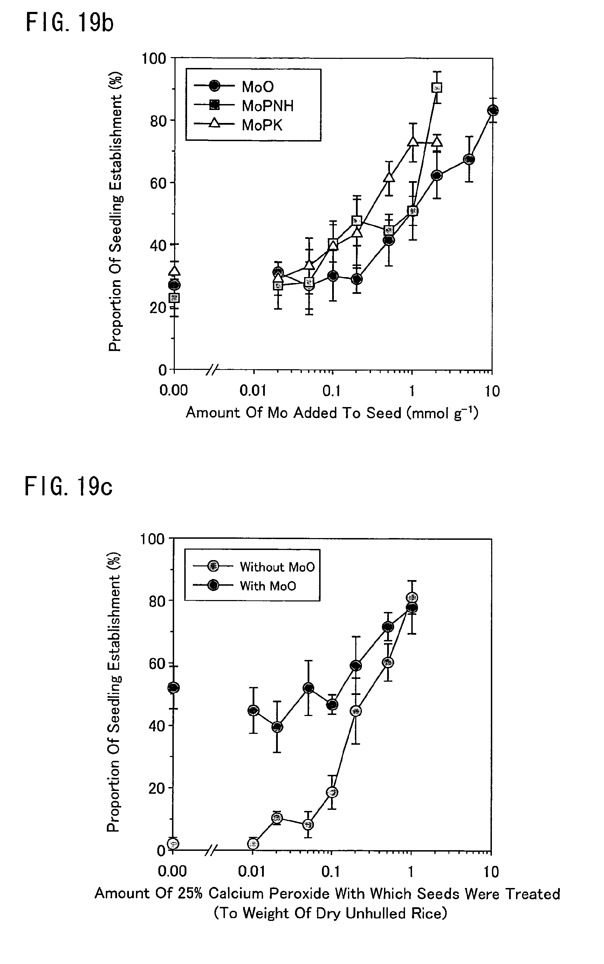

   Fig. 19b is a graph showing an improving effect on seedling establishment of paddy seeds to which mixtures of reduced iron and various molybdenum-containing substances (molybdenum compounds) were added.
Fig. 19c
   Fig. 19c is a graph showing an improving effect on seedling establishment of paddy seeds to which calcium peroxide alone or mixtures of calcium peroxide and molybdenum oxide were added.
Fig. 20a

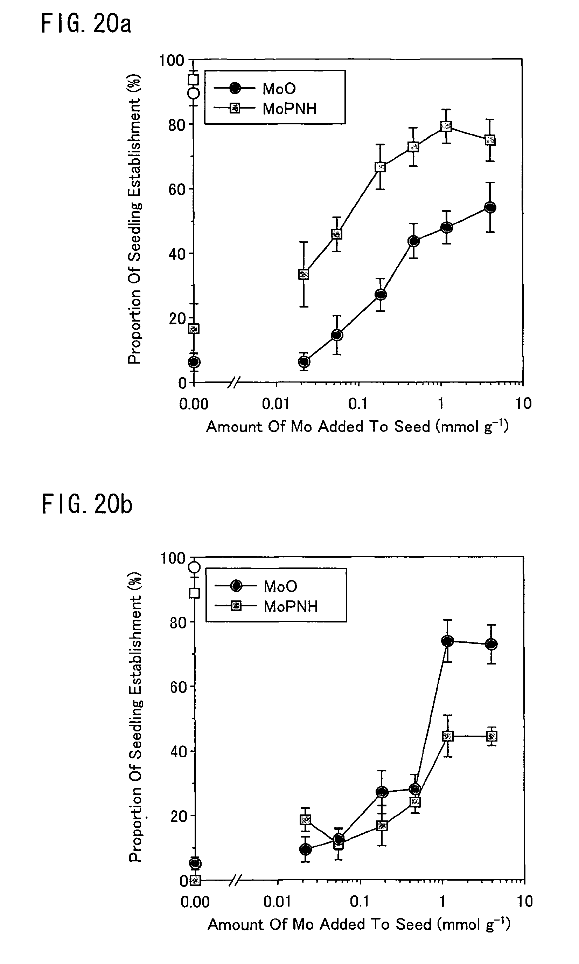

   Fig. 20a is a graph showing an improving effect on seedling establishment, as observed in cases where barley seeds to which various molybdenum-containing substances (molybdenum compounds) had been added were placed in humid soil.
Fig. 20b
   Fig. 20b is a graph showing an improving effect on seedling establishment, as observed in cases where wheat seeds to which various molybdenum-containing substances (molybdenum compounds) had been added were placed in humid soil.
Fig. 20c

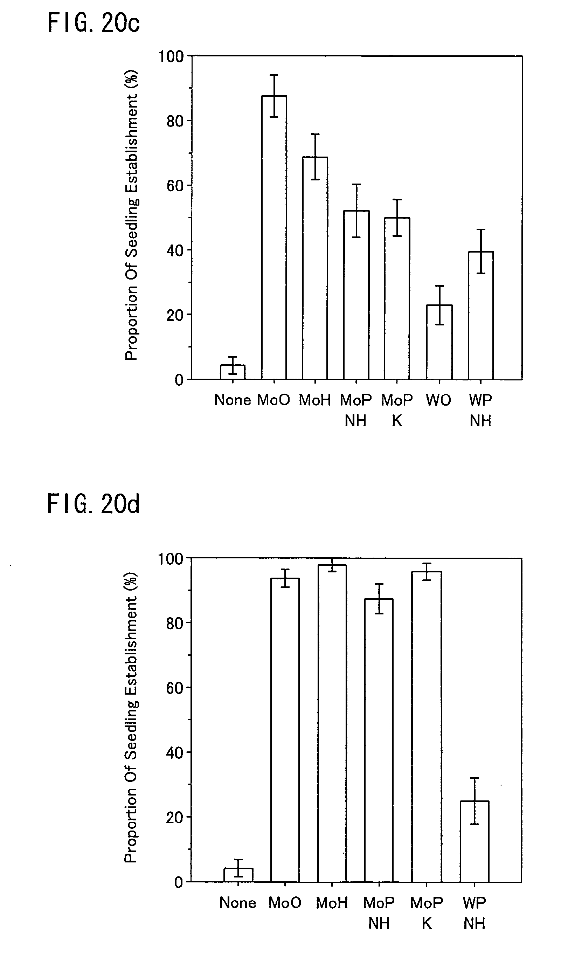

   Fig. 20c is a graph showing an improving effect on seedling establishment, as observed in cases where barely seeds to which various molybdenum-containing substances (molybdenum compounds) or various tungsten-containing substances (tungsten compounds) had been added were placed under submerged conditions for three days.
Fig. 20d
   Fig. 20d is a graph showing an improving effect on seedling establishment, as observed in cases where wheat seeds to which various molybdenum-containing substances (molybdenum compounds) or tungsten-containing substances (tungsten compounds) had been added were placed under submerged conditions for three days.
Fig. 20e

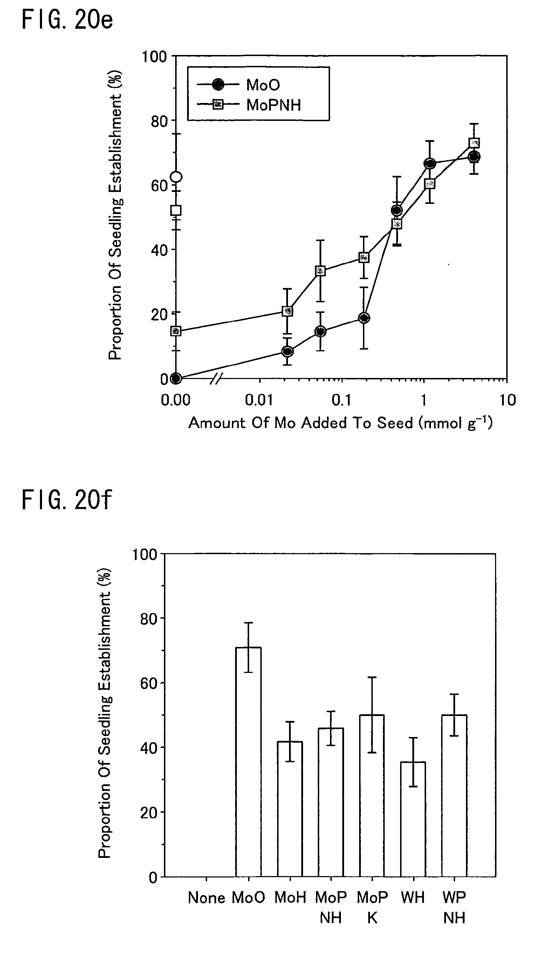

   Fig. 20e is a graph showing an improving effect on seedling establishment, as observed in cases where soybean seeds to which various molybdenum-containing substances (molybdenum compounds) had been added were placed under submerged conditions for two days.
Fig. 20f
   Fig. 20f is a graph showing an improving effect on seedling establishment, as observed in cases where soybean seeds to which various molybdenum-containing substances (molybdenum compounds) or tungsten-containing substances (tungsten compounds) had been added were placed under submerged conditions for two days.
Fig. 20g

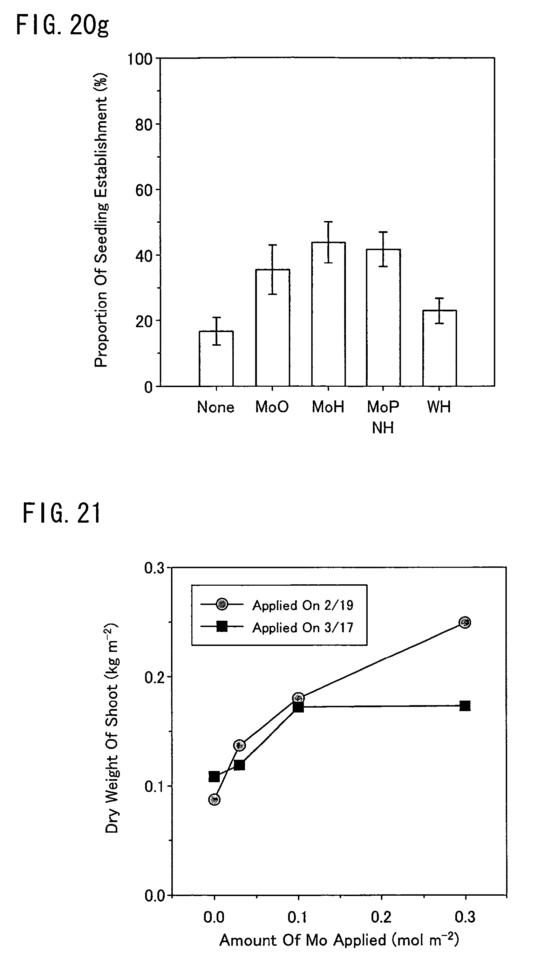

   Fig. 20g is a graph showing an improving effect on seedling establishment, as observed in cases where buckwheat seeds to which various molybdenum-containing substances (molybdenum compounds) or tungsten-containing substances (tungsten compounds) had been added were placed under submerged conditions for one day.
Fig. 21
   Fig. 21 is a graph showing an effect that addition of ammonium molybdophosphate has on barley having suffered from wet damage.
Fig. 22

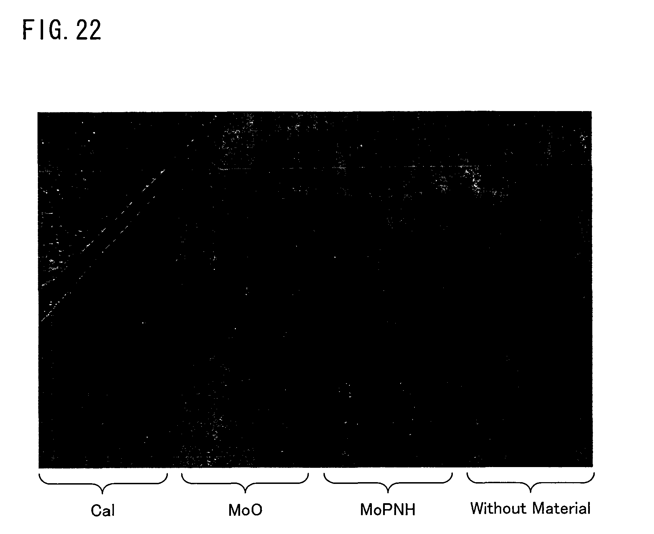

   Fig. 22 shows an improving effect on seedling establishment of paddy seeds coated with molybdenum compounds and grown in a paddy field.

### Description of Embodiments

### [Plant Growth-improving Agent]

A plant growth-improving agent according to the present contains a growth-improving component that increases (i.e., raises) a concentration of an oxoanion in an area around a plant, the oxoanion being heavier than a sulfate ion and containing four oxygen atoms. Owing to the growth-improving component, the plant growth-improving agent disturbs the metabolism of sulfate ions by microorganisms present in the area surrounding the plant and inhibits the activity of the microorganisms, such as the generation of sulfide ions that cause harm to the plant, thereby preventing an obstacle to the plant and improving the growth of the plant. The plant growth-improving agent is effective in improving plant growth, such as improving seedling establishment of a plant, improving early growth, and preventing autumn decline. In particular, seedling establishment of a plant can be remarkably improved with even a small amount of the plant growth-improving agent. The growth of a plant can be improved by growing the plant in an environment where the plant growth-improving agent is present.

It is preferable that in the plant growth-improving agent, the growth-improving component be selected from the group consisting of a molybdenum-containing substance, a tungsten-containing substance, a chromium-containing substance, a selenium-containing substance, and a tellurium-containing substance, each of which supplies an oxoanion. In this specification, the molybdenum-containing substance is a concept that encompasses elemental molybdenum and molybdenum compounds. Similarly, the tungsten-containing substance, the chromium-containing substance, the selenium-containing substance, and the tellurium-containing substance are each a concept that encompasses the corresponding element alone and compounds of the corresponding element. Molybdenum, tungsten, chromium, selenium, and tellurium are each an element in Group 6A(6) or 6B(16) of the periodic table that produces an oxoanion which is similar in structure to a sulfate ion, i.e., which contains four oxygen atoms and is heavier than a sulfate ion. Therefore, these growth-improving components are likely to produce oxoanions that are similar in structure to sulfate ions.

Since these oxoanions are similar in structure to sulfate ions, these oxoanions are considered to decrease the activity of microorganisms by being antagonistic to sulfate ions or inactivating enzymes and the like associated with sulfur metabolism in which sulfate ions are involved. One of these sulfur metabolism reactions is a reaction in which sulfide ions are generated from sulfate ions. Sulfide ions adversely affect plant growth. These oxoanions are considered to improve the growth of a plant by disturbing microorganisms' sulfur metabolism reaction that adversely affects the plant.

Further, these oxoanions inhibit even such activity of microorganisms as decay. Elemental sulfur, which constitutes a sulfate ion, is also an essential element that is needed in large amounts in living organisms. Therefore, these oxoanions inhibit the activity of microorganisms by disturbing even various sulfur metabolisms of microorganisms other than sulfide ion generation. Plants need elemental sulfur, too. However, since plants have bigger bodies than microorganisms, plants are comparatively unlikely to be affected by these oxoanions. As a result of these, it is considered that the decreased activity of microorganisms brings about a plant growth-improving effect.

Therefore, it is desirable that the growth-improving component be (i) an oxoacid, (ii) a polyacid in which oxoacids are condensed, (iii) a heteroacid derived from the oxoacid or polyacid having an element such as phosphorous or silicon, (iv) a salt of the oxoacid, polyacid, or heteroacid, and (v) a compound containing the oxoacid, polyacid, heteroacid, or the salt thereof, each of which supplies an oxoanion. Furthermore, from the point of view of the unlikelihood of adversely affecting a plant, it is desirable that the growth-improving component be a slightly-soluble compound that is unlikely to become high in oxoanion concentration or a compound, in the form of a polyacid or a heteroacid, which is unlikely to easily supply an oxoanion. Alternatively, from the same point of view, it is desirable that the growth-improving component be an elemental substance that produces an oxoanion by being gradually oxidized.

Among them, molybdenum is a trace element of a plant, has conventionally been used as a fertilizer, and is therefore highly safe. Further, the molybdenum-containing substance was found to have a strong inhibiting effect on decay, and is therefore preferable even in an environment where no sulfide ions are generated.

The molybdenum-containing substance takes the form of various substances. However, it is preferable to select, as the molybdenum-containing substance, a compound or an elemental substance each of which supplies molybdate ions and has a light adverse effect on the target plant. Therefore, it is desirable that the molybdenum-containing substance be metal molybdenum (elemental molybdenum), molybdenum oxide (molybdic anhydride), molybdic acid or its salt, molybdophosphoric acid (phosphomolybdic acid) or its salt, or molybdosilicic acid (silicomolybdic acid) or its salt. It is preferable that the molybdenum-containing substance be selected from the group consisting of metal molybdenum, molybdenum oxide, molybdic acid, calcium molybdate, magnesium molybdate, ammonium molybdophosphate (ammonium phosphomolybdate), potassium molybdophosphate (potassium phosphomolybdate), ammonium molybdate, sodium molybdate, potassium molybdate, molybdophosphoric acid, sodium molybdophosphate (sodium phosphomolybdate), and molybdosilicic acid, all of which are inexpensively commercially available.

Further, it is especially preferable that the molybdenum-containing substance be a slightly-soluble molybdenum-containing substance that slightly dissolves in water, because such a slightly-soluble molybdenum-containing substance is unlikely to adversely affect the target plant. The slightly-soluble molybdenum-containing substance is a molybdenum compound or elemental molybdenum each of which has a percentage of solubility of 10% by weight or lower with respect to water. Examples of the slightly-soluble molybdenum-containing substance include metal molybdenum, molybdenum oxide, molybdic acid, calcium molybdate, magnesium molybdate, ammonium molybdophosphate, potassium molybdophosphate, etc. Further, a polyacid, a heteroacid derived from oxoanion, a salt of a polyacid, a salt of a heteroacid, a compound containing a polyacid, a compound containing a heteroacid, a compound containing a salt of a polyacid, and a compound containing a salt of a heteroacid, in each of which oxoanions are condensed, are especially preferable because they are unlikely to easily supply molybdate ions and unlikely to adversely affect plants.

Among these, ammonium molybdophosphate and potassium molybdophosphate are each a salt of heteroacid that is slightly soluble in water and unlikely to easily supply an oxoanion. Moreover, ammonium molybdophosphate and potassium molybdophosphate have a beneficial effect of improving seedling establishment and growth. Furthermore, ammonium molybdophosphate and potassium molybdophosphate easily adhere to an area around a seed, and since they are yellow, accidental ingestion of a seed can be prevented by applying either of them to the seed. For all these reasons, ammonium molybdophosphate and potassium molybdophosphate are preferable. See the descriptions in examples below, particularly in Example 4-2, and in Fig. 14.

Tungsten is not a trace element of a plant. However, tungsten has not been reported to be poisonous to plants, animals, or the like, and is therefore preferable in terms of safety. In a case where the tungsten-containing substance is used as the growth-improving component, it is desirable that the tungsten-containing substance be a slightly-soluble tungsten-containing substance and take the form of a polyacid or a heteroacid that is unlikely to easily supply tungstate ions. Therefore, it is desirable that the tungsten-containing substance be metal tungsten, tungsten oxide (tungstic anhydride), tungstic acid or its salt, tungstophosphoric acid (phosphotungstic acid) or its salt, or tungstosilicic acid (silicotungstic acid) or its salt. Preferred examples of tungsten-containing substances that are inexpensively commercially available and slightly-soluble are metal tungsten, tungsten oxide, tungstic acid, ammonium paratungstate, or ammonium tungstophosphate (ammonium phosphotungstic acid).

The plant growth-improving agent is used for a plant that is cultivated under such conditions that at least part of its body is at least temporarily submerged or, in particular, for a plant that is forced to be at least temporarily submerged. It is preferable that the plant growth-improving agent be used for a plant that is cultivated in a paddy field.

Such at least temporarily submerged conditions encompass not only situations where plants are grown under submerged conditions for long periods, as in the case of paddy fields, solution cultures, etc., but also cases where temporarily submerged conditions are rendered by heavy rain and the like. Examples of plants that are cultivated under such at least temporarily submerged conditions include: poaceous plants such as rice, barley, wheat; papilionaceous plants such as soybean; polygonaceous plants such as buckwheat; cruciferous plants such as oilseed rape and cabbage; etc.

In particular, wheat and barley, which are important winter cereal crops in paddy fields, are vulnerable to wet damage due to heavy rain, and such wet damage leads to root rot. A reason for such wet damage is the generation of sulfide ions by soil reduction. Therefore, it is expected that use of the plant growth-improving agent reduces such wet damage. Furthermore, since soybean, which is a major crop for crop changeover in a paddy field, has its sowing period in the rainy season, soybean is also vulnerable to wet damage due to heavy rain, and such wet damage leads to insufficient seedling establishment. A reason for such wet damage is the generation of sulfide ions by soil reduction. Therefore, it is expected that use of the plant growth-improving agent reduces such wet damage to soybean.

Further, it is preferable that the plant growth-improving agent be used for rice, barley, wheat, etc. among poaceous plants or, especially preferably, for rice. Further, the plant growth-improving agent brings about a remarkable plant growth-improving effect especially in cases where paddy rice seedlings grown in a rice nursery are transplanted in a paddy field and where paddy rice is directly planted. In a case where paddy rice is directly planted in soil, soil reduction causes sulfide ions to be generated, and the sulfide ions are likely to exert a harmful influence such as unstable seedling establishment. Therefore, use of the plant growth-improving agent is effective especially in such a case.

The plant growth-improving agent may be in the form of a liquid obtained by dissolving the growth-improving component in a solvent or in the form of a liquid obtained by dispersing the growth-improving component in a dispersion medium. Alternatively, the plant growth-improving agent may be in the form of a solid formed by combining the growth-improving component with a pharmaceutically acceptable vehicle and the like. It is preferable that when used by being added to soil or used as a seed treatment agent by being applied to seeds, the plant growth-improving be in the form of a fine powder or a liquid so that ease of addition and accuracy of the amount of the plant growth-improving agent to be added can be maintained. The solvent in which the growth-improving component is dissolved or the dispersion medium in which the growth-improving component is dispersed needs only be a solvent or a dispersion medium that does not affect the effect of the growth-improving component and does not adversely affect a plant. Examples of the solvent or the dispersion medium include not only water but also an aqueous solution containing a thickening agent such as polyvinyl alcohol or carboxymethylcellulose sodium, a combination of two solutions whose viscosity is increased by mixing two types of solution such as a sodium alginate solution and a calcium solution, etc. In particular, a solution of polyvinyl alcohol or carboxymethylcellulose sodium is more desirable because it is commercially available as laundry starch in household goods stores and the like, easily available, safe, and inexpensive.

The plant growth-improving agent may be in the form of a liquid (such as a solution) in which the growth-improving component has been concentrated, so that a user can appropriately dilute the plant growth-improving agent for use. That is, the concentration of the growth-improving component in the plant growth-improving agent is not particularly limited, but the growth-improving component can be appropriately contained in such a concentration that the plant growth-improving agent can be easily handled. Further, the plant growth-improving agent may appropriately contain additives such as a pH adjuster and other antibacterial agents.

The plant growth-improving agent can be used by being added into a soil in which a plant is grown or a substitute for the soil. The substitute for the soil in which a plant is grown is intended to mean a substance, other than the soil, in which a plant can be grown, and is for example a water culture medium, rock wool, or the like. The plant growth-improving agent may be used by being applied onto a surface or into an inner part of a plant seed or being applied to a plant per se.

Sulfide ions that can be produced by microorganisms can move while remaining dissolved in a solution or can change into hydrogen sulfide to ascend in the solution. For this reason, sulfide ions generated in soil in a place at a high water level, for example, may move without change or may change into hydrogen sulfide to ascend, thus causing harm to a floating plant and the like floating on the surface of water. Therefore, it is preferable that the plant growth-improving agent be used not only in a plant per se and the rhizosphere of the plant, but also in that range of the growth environment of the plant in which sulfide ions or hydrogen sulfide can reach the plant.

It is preferable that when used by being added to a solution in which a plant is grown, a soil in which the plant is grown, a substitute for the solution, or a substitute for the soil, the plant growth-improving agent be added so as to be present in the solution, a solution of the soil, a solution of the substitute for the solution, or a solution of the substitute for the soil in a range of 0.01 mM to 10 mM or, more preferably, 0.05 mM to 3 mM in terms of an oxoanion being heavier than a sulfate ion and containing four oxygen atoms. Thus, even in the case of direct seeding of paddy rice, seedling establishment is achieved without draining the water after seeding, and the plant is not adversely affected. It should be noted that in a case where the word "to" indicates a range of numerical values, it is interpreted as including the upper and lower limits of the range (i.e., as being synonymous with "not less than and not more than").

The solution of the soil, the solution of the substitute for the solution, or the solution of the substitute for the soil is a liquid component contained in the soil, the substitute for the solution, or the substitute for the soil, and is obtained, for example, by depressurizing the soil or the substitute therefor. The above-indicated concentration of the plant growth-improving agent may be the concentration of the plant growth-improving agent in a solution obtained by inserting a hollow unglazed tube (manufactured by Token Sangyo K.K., insulating tube 2DH-1560/100) into submerged soil with one end of the tube closed, connecting the other end of the tube to another tube, and making the pressure negative inside the tubes. Further, anions such as molybdate ions are known to be hardly absorbed into soil. Since a supernatant liquid obtained after shaking submerged soil can serve as a substitute, the above-indicated concentration of the plant growth-improving agent in the soil solution may be the concentration of the plant growth-improving agent in a supernatant obtained by shaking soil for one hour in the presence of a solution 1.5 times as heavy as the soil and leaving the soil at rest for one day to allow soil particles to precipitate.

In particular, for the purpose of improving decreased growth of a plant due to strongly harmful sulfide ions, it is preferable that the plant growth-improving agent be added so that when an oxidation-reduction potential in the solution, in the soil, in the substitute for the solution, or in the substitute for the soil decreases to a certain level, no sulfide ions are generated. In this case, in particular, it is preferable that the concentration of the growth-improving component in the solution, in the solution of the soil, in the solution of the substitute for the solution, or in the solution of the substitute for the soil be kept in the above predetermined range of concentrations. Therefore, it is preferable that the growth-improving component be a slightly-soluble growth-improving component that is slow to dissolve and hardly becomes lower in concentration. Moreover, especially in a case where the growth-improving component is a water-soluble growth-improving component, it is preferable that the growth-improving component be added repeatedly at intervals corresponding to its attenuation, so that a decrease in concentration due to component erosion is compensated for.

As for the timing of addition of the plant growth-improving agent to the solution, the soil, the substitute for the solution, or the substitute for the soil, the plant growth-improving agent needs only be added in such a way as to be present in the growth environment of the plant during a seedling-establishing or growing period of the plant. Therefore, for maximum work efficiency, it is preferable that the plant growth-improving agent be added at the start of a cultivating step. However, the plant growth-improving agent may be added prior to the cultivating step. Alternatively, in view of the growth environment such as weather, e.g., out of concern for flooding due to rain, the plant growth-improving agent may be added in the middle of the cultivating step.

As for the place to which the plant growth-improving agent is added, the plant growth-improving agent needs only be added to all layers of the solution, the soil, the substitute for the solution, or the substitute for the soil, or needs only be added to an area around a seed, onto the surface of the seed, or into the inner part of the seed. Further, in a case where the growth-improving component is slightly soluble in water, it is preferable that the plant growth-improving agent be added to the vicinity of the seed (including the surface or inner part of the seed). The plant growth-improving agent may be added into a paddy field by dissolving the plant growth-improving agent in irrigation water. Further, the plant growth-improving agent according to the present invention may be added by being mixed with any sort of material such as a fertilizer or compost. In particular, since compost contains (1) sulfate ions that serve as the basis for sulfide ions that inhibit plant growth and (2) easily decomposable organic matters that easily render a reduced condition in which sulfide ions are generated, sheet composting facilitates generation of sulfide ions that inhibit plant growth. For this reason, application of the plant growth-improving agent added to compost inhibits the generation of sulfide ions due to compost, thus bringing about an improvement in plant growth. Furthermore, the plant growth-improving agent may be sprayed from above the plant. Even when having adhered to the plant by being sprayed, the plant growth-improving agent can act effectively by dropping into the solution, the soil, the substitute for the solution, and the substitute for the soil when it rains, for example, and dissolving in it. In particular, since agricultural chemicals are often sprayed onto plants, preparation of a liquid in which the plant growth-improving agent has been dissolved together with agricultural chemicals makes it possible to add the plant growth-improving agent to the solution, the soil, the substitute for the solution, and the substitute for the soil along with the application of agricultural chemicals.

In a case where the plant growth-improving agent is used by being applied onto the surface of a plant seed, appropriate quantitative conditions for the growth-improving component vary greatly depending on the type of the growth-improving component. When a solid growth-improving component is used by being applied onto the surface of a plant seed, e.g., in the case of metal molybdenum, molybdenum oxide, molybdic acid, calcium molybdate, magnesium molybdate, ammonium molybdophosphate, potassium molybdophosphate, metal tungsten, tungsten oxide, tungstic acid, or ammonium paratungstate, or ammonium tungstophosphate (ammonium phosphotungstate), each of which has a small adverse effect on the plant and is highly effective, it is preferable that the growth-improving component be made to adhere to the surface of a plant seed in 0.01 mmol to 10 mmol, preferably 0.02 mmol to 1 mmol, or more preferably 0.05 mmol to 0.1 mmol in terms of molybdenum or tungsten per gram of dry seeds with an adhesive such as polyvinyl alcohol. In a case where the amount of the growth-improving component to be used is in the range of 0.05 mmol to 0.1 mmol, it is may be preferable that the growth-improving component be made coexistent with a component (e.g., clay mineral, etc) that controls the dissolution and/or diffusion of the growth-improving component.

When a liquid growth-improving component is used by being applied onto the surface or into the inner part of a plant seed, e.g., in the case of an ammonium molybdate solution or a sodium molybdophosphate solution, each of which has a comparatively small adverse effect on the plant, it is preferable that the plant seed be soaked in the solution in 1 M or higher to 10 M or lower or, more preferably, 1 M or higher to 5 M or lower in terms of molybdenum under such conditions that water on the seed surface is removed by a spin-drier or the like after the soaking. Further, the duration of treatment of the seed with the solution is not particularly limited, but may be appropriately set according to the concentration of the solution, the size of the seed, plant species, etc., and is one minute to ten minutes or, preferably, approximately one minute.

By planting the seed thus treated in soil, the plant growth-improving agent is solubilized into the soil, so that the plant can be grown in the presence of the growth-improving component in an effective concentration for an improvement in the growth of the plant. Alternatively, a solution of the plant growth-improving agent may be applied to the seed surface by a spray or the like.

Further, in a case where the plant growth-improving agent is applied onto the surface of or into the inner part of a plant seed, the plant growth-improving agent may be applied onto the surface of or into the inner of the plant seed in combination with a conventionally publicly known oxygen generating agent, iron, etc. The plant growth-improving agent does not need to completely cover the seed surface, but needs only be applied to part of the seed surface. Therefore, it is only necessary to soak the seed in a solution of the plant growth-improving agent for a short time. This makes it possible to save cost and labor.

Here is an example of use where a plant growth-improving agent is directly added to soil. In this example, by using a simultaneous seeding and fertilizing machine capable of point sowing or line sowing, seeds are planted and a plant growth-improving agent containing a molybdenum-containing substance is added in approximately 0.02 mol/m² in terms of molybdenum (approximately 3 g/m² in terms of ammonium molybdophosphate) to an area around those positions on soil in which the seeds are to be planted, and then the seeds are grown in the same manner as a conventionally publicly known method. In a case where a plant growth-improving agent is added to soil before seeding, a plant growth-improving agent containing a molybdenum-containing substance is added to soil in approximately 0.2 mol/m² in terms of molybdenum (approximately 32 g/m² in terms of ammonium molybdophosphate), and then seeds are planted and grown in the same manner as a conventionally publicly known method.

### [Seed]

A seed according to the present invention is a seed onto a surface of which or into an inner part of which a plant growth-improving agent according to the present invention has been applied. Owing to the growth-improving component contained in the plant growth-improving agent applied onto the surface of or into the inner part of the seed, the growth-improving component disturbs the metabolism of sulfate ions by microorganisms present in the area surrounding the plant and inhibits the activity of the microorganisms, such as the generation of sulfide ions that cause harm to the plant, thereby improving the growth of the plant sprouting from the seed. Further, it is preferable that the seed according to the present invention contain the plant growth-improving agent not only on its surface but also in its inner part.

The seed according to the present invention can be produced by causing a powder or solution containing the plant growth-improving agent to adhere onto the surface of a plant seed or applying the powder or the solution onto the surface of the plant seed. Examples of the method for causing a powder or solution containing the plant growth-improving agent to adhere or be applied onto the surface of the plant seed include a method for applying the plant growth-improving agent onto a seed surface after causing an appropriate amount of water or an adhesive to adhere to the seed surface, a method for, after adding a powder containing the plant growth-improving agent to water or an adhesive and stirring the resulting mixture, applying the mixture to a seed, a method for mixing a seed into a solution containing an appropriate amount of the plant growth-improving agent and stirring the resulting mixture, etc. Alternatively, the seed according to the present invention may be produced by soaking a plant seed in a solution containing the plant growth-improving agent.

In a case where the seed according to the present invention may be produced by soaking a plant seed in a solution containing the plant growth-improving agent, the solution can be absorbed into the husk or inner part of the seed. In a case where the solution used is a low-concentration solution that does not adversely affect the plant, the seed can be soaked in the solution for a long time for the secondary purpose of stimulating the growth of the plant. In a case where the treatment needs to be done in a short time, a high-concentration solution is needed. The seed according to the present invention does not need to have the plant growth-improving agent adhering to the entire surface of the seed, but needs only have the plant growth-improving agent adhering at least part of the surface. Therefore, it may be only necessary to soak the seed in a solution of the plant growth-improving agent for a short time. This makes it possible to save cost and labor.

Appropriate concentration conditions for the growth-improving component contained in the plant growth-improving agent when the seed according to the present invention is produced are identical to those described in section [Plant Growth-improving Agent], and as such, are not described in this section. The seed according to the present invention may be coated with a publicly known spreading agent before the application of the plant growth-improving agent so that the plant growth-improving agent better adheres to the seed. Further, the seed may also have an oxygen generating agent, iron, etc. applied onto its surface or into its inner part. Moreover, after the application of the plant growth-improving agent to the seed, the seed may be dried so that the seed surface does not get sticky.

The seed according to the present invention is not particularly limited, as long as the seed to which the plant growth-improving agent is applied is a plant seed that may suffer harmful effects from microorganisms. For example, it is preferable that the seed to which the plant growth-improving agent is applied be a rice seed. The seed according to the present invention brings about a remarkable plant growth-improving effect in the case of direct seeding.

By planting the seed thus produced in the solution, the soil, the substitute for the solution, or the substitute for the soil, the plant growth-improving agent is solubilized into the soil or the substitute for the soil, so that the plant can be grown in the presence of the growth-improving component in an effective concentration for an improvement in the growth of the plant.

Here is an example of production and use of a seed according to the present invention. Paddy rice seeds are soaked in water or lukewarm water, and are stimulated to slightly germinate or to be about to germinate. For prevention of removal of the plant growth-improving agent from the seeds in a seeding machine, the paddy rice seeds are temporarily soaked in an approximately tenfold dilution solution of a commercially available laundry starch (containing approximately a little less than 10% by weight of polyvinyl alcohol), and then the extra water on the surface was removed by using a spin dryer. Immediately after that, the paddy rice seeds are lightly covered with a molybdenum-containing substance in approximately 0.1 mol in terms of molybdenum (in the case of ammonium molybdophosphate, the weight ratio of the molybdenum-containing substance to the dry paddy rice seeds is approximately 2%) per kilogram of dry paddy rice seed before the soaking. After the application of the molybdenum-containing substance, the paddy rice seeds are dried so as not to get sticky. As with seeds and the like coated with a conventionally publicly known oxygen generating agent, the resulting paddy rice seeds are planted in a paddy field after soil puddling by using a point sowing machine, a line sowing machine, or a broadcast sowing machine and cultivated.

### [Method for Improving Plant Growth]

A method according to the present invention for improving plant growth includes a cultivating step of growing a plant in the presence of a growth-improving component that increases (i.e., raises) a concentration of an oxoanion in an area around the plant, the oxoanion being heavier than a sulfate ion and containing four oxygen atoms. Owing to the growth-improving component, the method for improving plant growth inhibits the activity of microorganisms in the growth environment of the plant, thereby improving the growth of the plant. The method for improving plant growth is effective in improving plant growth, such as improving seedling establishment of a plant, improving the early growth, and preventing autumn decline, i.e., root damage due to sulfide ions. In particular, seedling establishment of a plant can be remarkably improved in the presence of even a small amount of the growth-improving component.

The method for improving plant growth makes the growth-improving component present in the growth environment of the plant. The term "growth environment of the plant" here is intended to mean the vicinity of the plant including the plant per se, the inside of a solution in which the plant is grown, of a soil in which the plant is grown, or of a substitute for the soil, and the rhizosphere of the plant. It should be noted here that the solution in which the plant is grown or the substitute for the soil is intended to mean a liquid or solid in which a plant can be grown (excluding the soil), and is for example a water culture medium, rock wool, or the like.

Sulfide ions can move while remaining dissolved in a solution or can change into hydrogen sulfide to ascend in the solution. For this reason, sulfide ions generated in soil in a place at a high water level, for example, may move without change or may change into hydrogen sulfide to ascend, thus causing harm to a floating plant and the like floating on the surface of water. Therefore, for avoidance of damage due to sulfide ions, it is preferable that the growth-improving component be present not only in the vicinity of a plant including the plant per se and the rhizosphere of the plant, but also in that range of the growth environment of the plant in which sulfide ions or hydrogen sulfide can reach the plant.

It is preferable that in the method according to the present invention for improving plant growth, the growth-improving component be selected from the group consisting of substances each containing molybdenum, tungsten, chromium, selenium, or tellurium in Group 6A(6) or 6B(16) of the periodic table, each of which substances produces an oxoanion containing four oxygen atoms and being heavier than a sulfate ion. An oxoanion produced by any one of these growth-improving components is similar in shape to a sulfate ion serving as a substrate for a sulfide ion, and is therefore considered to disturb the metabolism of sulfate ions by microorganisms present in the area around the plant and inhibit the activity of the microorganisms such as the generation of sulfide ions that cause harm to the plant.

In particular, molybdenum is a trace element of a plant, has conventionally been used as a fertilizer, and is therefore preferable in terms of safety. Further, the molybdenum-containing substance has a strong effect of inhibiting microorganisms such as inhibiting decay, and is therefore preferable even in an environment where no sulfide ions are generated.

The molybdenum-containing substance takes the form of various substances. However, it is preferable to select, as the molybdenum-containing substance, a compound or an elemental substance each of which supplies molybdate ions and has a light adverse effect on the target plant. Therefore, it is desirable that the molybdenum-containing substance be metal molybdenum (elemental molybdenum), molybdenum oxide (molybdic anhydride), molybdic acid or its salt, molybdophosphoric acid or its salt, or molybdosilicic acid or its salt. It is preferable that the molybdenum-containing substance be selected from the group consisting of metal molybdenum, molybdenum oxide, molybdic acid, calcium molybdate, magnesium molybdate, ammonium molybdophosphate, potassium molybdophosphate, ammonium molybdate, sodium molybdate, potassium molybdate, molybdophosphoric acid, sodium molybdophosphate, and molybdosilicic acid, all of which are inexpensively commercially available.

Further, it is especially preferable that the molybdenum-containing substance be a slightly-soluble molybdenum-containing substance that can be slightly dissolved in water, because such a slightly-soluble molybdenum-containing substance is unlikely to adversely affect the target plant. Further, a polyacid, a heteroacid, a salt of a polyacid, a salt of a heteroacid, a compound containing a polyacid, a compound containing a heteroacid, a compound containing a salt of a polyacid, and a compound containing a salt of a heteroacid, in each of which oxoanions are condensed, are especially preferable because they are unlikely to easily supply molybdate ions and unlikely to adversely affect plants. Ammonium molybdophosphate and potassium molybdophosphate are each a salt of a heteroacid that is slightly soluble in water and unlikely to easily supply molybdate ions. Therefore, ammonium molybdophosphate and potassium molybdophosphate have a beneficial effect of improving seedling establishment and growth. Furthermore, ammonium molybdophosphate and potassium molybdophosphate easily adhere to the surface of a seed, and since they are yellow, accidental ingestion of a seed can be prevented by applying either of them to the seed. For all these reasons, ammonium molybdophosphate and potassium molybdophosphate are preferable.

Tungsten is not a trace element of a plant. However, tungsten has not been reported to be poisonous to plants, animals, or the like, and is therefore preferable in terms of safety. In a case where the tungsten-containing substance is used as the growth-improving component, it is desirable that the tungsten-containing substance be a slightly-soluble tungsten-containing substance or be a compound that takes the form of a polyacid or a heteroacid that is unlikely to easily supply tungstate ions. Therefore, it is desirable that the tungsten-containing substance be metal tungsten, tungsten oxide (tungstic anhydride), tungstic acid or its salt, tungstophosphoric acid or its salt, or tungstosilicic acid or its salt. Preferred examples of tungsten-containing substances that are inexpensively commercially available and slightly-soluble are metal tungsten, tungsten oxide, tungstic acid, ammonium paratungstate, or ammonium tungstophosphate.

The method for improving plant growth can be applied to a plant that is cultivated under such conditions as to be at least temporarily submerged. Such at least temporarily submerged conditions encompass not only situation where plants are grown under submerged conditions for long periods, as in the case of paddy fields, solution culture, etc., but also cases where temporarily submerged conditions are rendered by heavy rain and the like. Examples of plants that are cultivated under such at least temporarily submerged conditions include: poaceous plants such as rice, barley, wheat; papilionaceous plants such as soybean; polygonaceous plants such as buckwheat; cruciferous plants such as oilseed rape and cabbage; etc.

Further, it is preferable that the method for improving plant growth be applied to rice, barley, wheat, etc. among poaceous plants or, especially preferably, to rice. Further, this method brings about a remarkable plant growth-improving effect especially in a case where paddy rice is directly planted. In a case where paddy rice is directly planted, soil reduction causes sulfide ions to be generated, and the sulfide ions are likely to exert a harmful influence such as unstable seedling establishment. Therefore, use of this method is effective especially in such a case. Alternatively, the plant may be grown by sprouting a seedling in a nursery cabinet or the like and transplanting the seedling.

### (Addition of the Plant Growth-improving Agent)

In the method for improving plant growth, the growth-improving component may be made present by adding the plant growth-improving agent according to the present invention to a solution in which the plant is grown, to a soil in which the plant is grown, to a substitute for the solution, or to a substitute for the soil.

It is preferable that in the method for improving plant growth, the plant growth-improving agent be added into a solution in which a plant is grown, a soil in which the plant is grown, a substitute for the solution, or a substitute for the soil, so as to be present in the solution, a solution of the soil, a solution of the substitute for the solution, or a solution of the substitute for the soil in a range of 0.01 mM to 10 mM or, more preferably, 0.05 mM to 3 mM in terms of an oxoanion being heavier than a sulfate ion and containing four oxygen atoms. Thus, even in the case of direct seeding of paddy rice, seedling establishment is achieved without draining the water after seeding, and the plant is not adversely affected. The solution of the soil, the solution of the substitute for the solution, or the solution of the substitute for the soil is a liquid component contained in the soil, the substitute for the solution, or the substitute for the soil, and is obtained, for example, by depressurizing the soil or the substitute therefor. The above-indicated concentration of the plant growth-improving agent in terms of the oxoanion may be the concentration of the plant growth-improving agent in a solution obtained by inserting a hollow unglazed tube (manufactured by Token Sangyo K.K., insulating tube 2DH-1560/100) into submerged soil with one end of the tube closed, connecting the other end of the tube to another tube, and making the pressure negative inside the tubes. Further, anions such as molybdate ions are known to be hardly absorbed into soil. Since a supernatant liquid obtained after shaking submerged soil can serve as a substitute, the above-indicated concentration of the plant growth-improving agent in the soil solution may be the concentration of the plant growth-improving agent in a supernatant obtained by shaking soil for one hour in the presence of a solution 1.5 times as heavy as the soil and leaving the soil at rest for one day so that soil particles precipitate.

It is preferable that in the method for improving plant growth, when an oxidation-reduction potential as normalized at a pH of 7 is at least temporarily 0 mV or lower in at least part of the solution, the soil, the substitute for the solution, or the substitute for the soil, the plant growth-improving agent be added to the solution, the soil, the substitute for the solution, or the substitute for the soil. It is known that the sulfide ion generation begins when an oxidation-reduction potential as normalized at a pH of 7 is 0 mV to 200 mV (Reference 1: Kyuma, K., Shin-dojyogaku (New Pedology), p. 166, 1984).

Therefore, when it is anticipated that the oxidation-reduction potential is 0 mV or lower even in part of the solution, the soil, the substitute for the solution, or the substitute for the soil even for a short time, the generation of sulfide ions due to reduction can be efficiently inhibited by adding the plant growth-improving agent to the solution, to the soil, to the substitute for the solution, or to the substitute for the soil. In the other words, it is preferable that the plant growth-improving agent be added when it is anticipated that an oxidation-reduction potential as normalized at a pH of 7 is at least temporarily 0 mV or lower even in part of the solution in which the plant is grown, the soil in which the plant is grown, the substitute for the solution, or the substitute for the soil even for a short time.

Further, it is preferable that the plant growth-improving agent be added so that the concentration of the growth-improving component is kept within the predetermined range of concentrations so that no sulfide ions are generated when an oxidation-reduction potential in the solution, in the soil, in the substitute for the solution, or in the substitute for the soil decreases to a certain level. Therefore, it is preferable that the growth-improving component be a slightly-soluble growth-improving component that is slow to dissolve and hardly becomes lower in concentration. Moreover, in a case where the growth-improving component is a water-soluble growth-improving component, it is preferable that the growth-improving component be added repeatedly at intervals corresponding to its attenuation, so that a decrease in concentration due to component erosion is compensated for.

As for the timing of addition of the plant growth-improving agent to the solution, the soil, the substitute for the solution, or the substitute for the soil, the plant growth-improving agent needs only be added in such a way as to be present in the growth environment of the plant during a seedling-establishing or growing period of the plant. Therefore, for maximum work efficiency, it is preferable that the plant growth-improving agent be added at the start of a cultivating step. However, the plant growth-improving agent may be added prior to the cultivating step. Alternatively, in view of the growth environment such as weather, e.g., out of concern for flooding due to rain, the plant growth-improving agent may be added in the middle of the cultivating step.

As for the place to which the plant growth-improving agent is added, the plant growth-improving agent needs only be added to all layers of the soil, or the substitute for the soil, or needs only be added to an area around a seed, onto the surface of the seed, or into the inner part of the seed. Further, in a case where the growth-improving component is slightly soluble in water, it is preferable that the plant growth-improving agent be added to the vicinity of the seeds (including the surface or inner part of the seed). The plant growth-improving agent may be added into a paddy field by dissolving the plant growth-improving agent in irrigation water.

### (Use of a Seed to Which the Plant Growth-improving Agent Has Been Applied)

The method according to the present invention for improving plant growth may further include a seeding step of planting the aforementioned seed according to the present invention in a soil in which the plant is grown, the seeding step being executed prior to the cultivating step. Since the seed according to the present invention contains the plant growth-improving agent on its surface or in its inner part, the growth-improving component solubilizes into the soil or the like and inhibits the activity of microorganisms in the growth environment of the plant, thereby improving the growth of the plant.

The seed according to the present invention is planted in a paddy field after soil puddling by using a conventionally publicly known point sowing machine, line sowing machine, or broadcast sowing machine. After the seed according to the present invention has been planted in the soil or the like, the plant growth-improving agent may be further added to the soil or the like during the growing period of the plant.

### (Addition of a Material That Solubilizes the Growth-improving Component)

A method for according to the present invention for improving plant growth may make the growth-improving agent present by adding, to a solution in which a plant is grown, to a soil in which the plant is grown, to a substitute for the solution, or to a substitute for the soil, a material that generates or solubilizes an oxoanion being heavier than a sulfate ion and containing four oxygen atoms from a molybdenum-containing substance, a tungsten-containing substance, a chromium-containing substance, a selenium-containing substance, or a tellurium-containing substance contained in the solution, in the soil, in a the substitute for the solution, or in the substitute for the soil.

The soil in which the plant is grown may contain a molybdenum, tungsten, chromium, selenium, or tellurium compound, and by solubilizing oxoanions from the compounds, the sulfur metabolism of microorganisms is disturbed and the activity of the microorganisms is decreased, whereby the growth of the plant is improved.

An example of the material that solubilizes the growth-improving component contained in the soil in which the plant is grown is a material that injects into the soil a large number of negative ions different from the growth-improving component contained in the soil and solubilizes the growth-improving component by ion exchange. An example of such a material is a phosphate fertilizer. Alternatively, it is possible to use a material that heats or alkalifies the soil in which the plant is grown and thereby solubilizes the growth-improving component contained in the soil.

### (Others, Modifications, etc.)

The present invention is expected to be widely used in the field of agriculture in which crops are cultivated under conditions where there is an abundance of water and, in particular, in paddy rice cropping. A plant growth-improving agent according to the present invention, a seed according to the present invention to which such a plant growth-improving agent has been applied, and a method according to the present invention for improving plant growth achieve a reduction of cost and labor while reducing the burden on the environment, and make it possible to easily and efficiently cultivate a plant. In particular, application of the present invention to paddy rice leads to an improvement in seedling establishment. This makes it unnecessary to drain the water from the paddy field after seeding, thus leading to a reduction of water and fertilizer. Moreover, since weed is inhibited, a reduction of herbicides is achieved. The improvement in seedling establishment leads to a reduction in the number of seeds to be planted, and thus to a reduction in the cost of seeds. The present invention is also useful in conservation of the growth environment of the plant.

Introduction of direct seeding in submerged paddy field has so far been difficult because direct seeding results in unstable seedling establishment, although direct seeding is a method that saves labor. Since the present invention stabilizes seedling establishment of paddy rice, introduction of direct seeding in submerged paddy field can be promoted. Further, the growth-improving component can be easily used because the amount of the growth-improving component that is applied to seeds in the present invention is very small and the growth-improving component needs only be applied to the seeds. In particular, the molybdenum-containing substance, which is used as the growth-improving component, is inexpensive. Moreover, the molybdenum-containing substance is a trace element of a plant, has conventionally been used as a fertilizer component, and therefore has no problems in terms of safety. Further, the tungsten-containing substance has not been reported to be poisonous, and is therefore considered to be preferable in terms of safety.

The plant growth-improving agent according to the present invention can also be used as a seedling establishment improving agent for improving seedling establishment of a plant or a seedling establishment improving method. The term "improvement in seedling establishment of a plant" here means that the percentage of seedling establishment (proportion of seedling establishment) of the plant becomes higher, preferably 20% or higher, more preferably 25% or higher, further preferably 30% or higher, or especially preferably 50% or higher as compared with a plant of the same kind (to which the plant growth-improving agent is not applied) having entered its period of seedling establishment under substantially the same environment and conditions.

Further, in a case where the plant growth-improving agent is used as a seedling establishment improving agent, it is preferable, for the purpose of efficiently improving the proportion of seedling establishment while using the active ingredient (growth-improving component) in small amounts, that the plant growth-improving agent be applied to a seed. Examples of methods for applying the plant growth-improving agent to a seed include, but are not limited to, (1) a method for soaking a seed for a certain period of time in a liquid (solution or dispersion liquid) containing the plant growth-improving agent, (2) a method for coating the surface of a seed with a layer containing the plant growth-improving agent, etc., as mentioned above. In the case of the method (2), for example, the surface of a seed is coated by using an adhesive in which the plant growth-improving agent has been dissolved or dispersed. Alternatively, an adhesive layer or a layer of a liquid (e.g., water) is formed on the surface of the seed, and the plant growth-improving agent is made to adhere to the layer in the form of a powder. The adhesive is not limited to a particular type, but may be any of those various components known in the field of seed coating. The layer containing the plant growth-improving agent may be formed directly on the surface of the seed, or may be joined to the surface via another coating layer. That is, the seed may be a multilayer coated seed including another coating layer in addition to the layer containing the plant growth-improving agent. Such another coating layer is not limited to a particular type, but is for example a layer containing various seed treatment agents (such as pesticides), etc.

Furthermore, the seed coated with the layer containing the plant growth-improving agent may further include a component (e.g., clay mineral, etc.) that controls the dissolution and/or dispersion of the growth-improving component according to the present invention, etc. These components may be contained in the layer containing the plant growth-improving agent, or may be contained in another coating layer.

Further, the plant growth-improving agent according to the present invention is also used as a wet damage preventing/reducing agent for preventing the occurrence of wet damage to in the plant or reducing the harm of wet damage. In a case where such an amount of water as to inhibit the healthy growth of a target plant has been supplied or is expected to be supplied due to heavy rain, long rain, river flooding, etc., for example, the plant growth-improving agent (wet damage preventing/reducing agent) is applied to the target plant, albeit not particularly limited to such a case.

Further, the present invention is also applicable to those aspects shown below as examples.
(1) With use of water or an adhesive (such as PVA), germinated unhusked rice is dust coated with at least one type of compound selected from the group consisting of molybdenum oxide, ammonium molybdophosphate, and potassium molybdophosphate in 0.05 mmol/g to 0.5 mmol/g (dry seed weight) in terms of molybdenum. Immediately after that, the coated seeds thus obtained are planted.
(2) The above aspect (1) is implemented by using dry unhusked rice instead of germinated unhusked rice, whereby commercially distributable coated seeds are obtained. In a case where the above aspect (1) is implemented by using dry unhusked rice, ammonium molybdophosphate or potassium molybdophosphate may be preferred to molybdenum oxide.
(3) At least one type of compound selected from the group consisting of molybdenum oxide, ammonium molybdophosphate, and potassium molybdophosphate is mixed with clay weighting approximately 20% to 200% or, more preferably, approximately 50% to 100% of dry seed weight, and seeds are coated with the resulting clay and planted. The seeds thus obtained are compatible with a currently popular seeding machine such as a broadcast sowing machine or a point sowing machine, and allow efficient planting.

In the same manner as in the above aspect (3) except that all or part of the clay is replaced by an oxygen generating agent or iron, seeds are coated with the compound and the oxygen generating agent, the iron, or the mixture containing clay, whereby coated seeds are obtained. The term "mixture containing the clay" here means a mixture containing at least either the oxygen generating agent or the iron and the clay.
(5) Seeds are soaked for approximately one minute in or lightly coated with soluble molybdenum (ammonium molybdate or sodium molybdophosphate, see Fig. 13), whereby seeds treated with the compound are obtained.

Furthermore, the plant growth-improving agent according to the present invention can inhibit the proliferation and/or activity of various bacteria, as can be seen from the fact that it inhibited decay in Example 3. Since addition of the plant growth-improving agent to a seed or the like leads even to inhibition of pathogenic bacteria that cause disease damage to a plant, such addition of the plant growth-improving agent to a seed is expected to be utilized as a pathogen control method. From the point of view of antibacterial action, the molybdenum-containing substance is especially preferable among these plant growth-improving agents. However, the tungsten-containing substance and the like also exhibit antibacterial action.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

Further, all of the academic literatures and patent literatures described in this specification are incorporated herein by references in this specification.

### [Examples]

### [Example 1: Effect of a Growth-improving Component on Plant Growth]

### (1-1: Effect of Sulfate Ions, Which Serves as a Substrate for Sulfide Ions, on Seedling Establishment)

The effect of concentrations of sulfate ions, which serve as a substrate for sulfide ions, in the soil solution on the percentage of seedling establishment were examined for each of the following cases: unsterilized paddy soil placed at a constant temperature of 20°C; unsterilized paddy soil placed at a constant temperature of 30°C, unsterilized paddy soil placed in an outdoor location (at a mean temperature of 25.4°C for the duration of examination); and sterilized paddy soil placed at a constant temperature of 20°C. The results are shown in Fig. 1.

First, ammonium sulfate solutions in different concentrations were added to samples of paddy humid soil (obtained from a paddy field in Chikugo City, Fukuoka Prefecture, Japan; refrigerated in the form of humid soil until just before its use) with a soil-to-liquid ratio of 1:1.5, so that the resulting supernatant liquids above the samples of soil thus adjusted had varying concentrations of sulfate ions. The amounts of ammonium sulfate added to the samples of soil were equivalent to 0, 2, 4, 7, 10, 15, and 20 g/m² in terms of nitrogen, respectively, on the condition that the weight of dry soil is 100 kg/m². At the same time as ammonium sulfate, potassium in an amount of 5 g/m² in terms of potassium oxide was added as potassium chloride. Before the addition of the solutions to the samples of soil, some of the soil had been sterilized by being autoclaved for one hour at 121°C.

Each of the samples of soil thus adjusted was placed into a container (in the shape of a cylinder approximately 7 cm in diameter) in an amount equivalent to 120 g of dry soil, shaken for approximately one hour, and left at rest for two days at 4°C. On this condition, the resulting soil layer was approximately 4 cm thick and the resulting water layer above the soil surface was approximately 1 cm thick. Paddy rice seeds (branded as Hinohikari) were sterilized by being soaked in 70% ethanol for ten minutes and then in a fivefold diluted solution of sodium hypochlorite (purchased from Wako Pure Chemical Industries, Ltd.) for ten minutes. The paddy rice seeds were then slightly germinated by being soaked in water at 10°C for five days and then in water at 30°C for two days. The germinated unhusked rice thus obtained was used in the following testing.

Nine paddy rice seeds per container were planted at a depth of 15 mm at intervals of approximately 2 cm in each of the samples of soil thus adjusted, and the seed holes were closed by lightly shaking the sample of soil. The samples of unsterilized soil were left at rest at a constant temperature of 20°C or 30°C, and the samples of sterilized soil were left at a constant temperature of 20°C in incubators in which fluorescent lights were on for twelve hours per day. After that, a decrease in the water above the soil surface was compensated for by distilled water so that the submerged conditions were kept. The percentages of seedling establishment of paddy rice after 21 days in the samples of soil in the respective sulfate ion concentrations are shown in Fig. 1.

As shown in Fig. 1, in the case of unsterilized soil, there were drastic decreases in proportion of seedling establishment in the presence of a sulfate ion concentration of 1 mM, regardless of the conditions. In the case of unsterilized soil placed at a constant temperature of 20°C, substantially no seedling establishment was observed at a sulfate ion concentration of higher than 2 mM. In the case of unsterilized soil placed at a constant temperature of 30°C or in an outdoor location, there were decreases in proportion of seedling establishment to 10% or lower at a sulfate ion concentration of higher than 3 mM. Thus, it was shown that in the case of unsterilized soil, the presence of sulfate ions, which serve as a substrate for sulfide ions, inhibits the growth of paddy rice, thus leading to decreases in proportion of seedling establishment. Meanwhile, in the case of sterilized soil, there was no decrease in seedling establishment regardless of the concentrations of sulfate ions, which serve as a substrate for sulfide ions. This indicates that a decrease in seedling establishment due to sulfate ions requires the presence of microorganisms.

In the same manner as above, ammonium sulfate was applied to samples of unsterilized soil in amounts of 0, 0.75, 1.5, and 3 mol/m², respectively, and the samples of unsterilized soil were placed at rest at a constant temperature of 30°C. The states of the samples of unsterilized soil one week after seeding are shown in Fig. 2. The supernatant liquids obtained after shaking the samples of soil thus adjusted had sulfate ion concentrations shown in Fig. 2. However, since methylene blue decolorizes in a reduced state, methylene blue weighing 0.1% of dry soil was added to each sample of soil so that a reduced state of the soil could be detected. A pale circle in the soil shows that the area around the seed had been reduced. Fig. 2 shows a blackened portion of the area around the seed at 0.91 mM or higher of sulfate ions, and the blackened portion is black ferric sulfide, which indicates that sulfide ions was generated. For this reason, a decrease in proportion of seedling establishment due to sulfate ions indirectly indicates a decrease in seedling establishment due to sulfide ions. It should be noted that methylene blue is known to decolorize at an oxidation-reduction potential of 0.05 V or lower with a pH of approximately 6. Further, the generation of the ferric sulfide indicates that the oxidation-reduction potential had decreased to approximately -0.2 V, at which sulfides are generated. Therefore, it is judged that in this experimental environment, an oxidation-reduction potential as normalized with a pH of 7 is at least temporarily 0 mV or lower.

### (1-2; Effect of a Growth-improving Component on Seedling Establishment)

Ammonium sulfate in an equivalent amount of 10 g/m² in terms of nitrogen and potassium chloride as potassium in an equivalent amount of 5 g/m² in terms of potassium oxide were added to paddy humid soil (obtained from a paddy field in Chikugo City, Fukuoka Prefecture, Japan; refrigerated in the form of humid soil until just before its use) on the condition that the weight of dry soil is 100 kg/m². Further, eight conditions with varying amounts of potassium molybdate (purchased from Wako Pure Chemical Industries, Ltd.) added were created by adding solutions of potassium molybdate in equivalent amounts of 0, 0.038, 0.075, 0.15, 0.3, 0.75, 1.5, and 3 mol/m² to samples of soil, respectively, with a soil-to-liquid ratio of 1:1.5. Each of the samples of soil to which the substance had been added was placed into a container (in the shape of a cylinder approximately 7 cm in diameter) in an amount equivalent to 120 g of dry soil, shaken for approximately one hour, and left at rest for two days at 4°C. On this condition, the resulting soil layer was approximately 4 cm thick and the resulting water layer above the surface of the soil was approximately 1 cm thick.

Paddy rice seeds (branded as Hinohikari) were sterilized by being soaked in a 70% diluted ethanol for ten minutes and then in a fivefold diluted solution of sodium hypochlorite (purchased from Wako Pure Chemical Industries, Ltd.) for ten minutes. The paddy rice seeds were then slightly germinated by being soaked in water at 10°C for five days and then in water at 30°C for two days. The germinated unhusked rice thus obtained was used.

Nine paddy rice seeds per container were planted at a depth of 15 mm at intervals of approximately 2 cm in each of the samples of paddy soil adjusted with varying concentrations of potassium molybdenum, and the seed holes were closed by lightly shaking the sample of soil. The containers in which the paddy seeds had been planted were each left at rest in an incubator, kept at a temperature of 20°C or 30°C, in which fluorescent lights were on for twelve hours per day. After that, a decrease in the water above the soil surface was compensated for by distilled water so that the submerged conditions were kept. The percentages of seedling establishment of paddy rice after 21 days in the samples of soil to which the aqueous solutions of potassium molybdate in the respective concentrations had been added are shown in Fig. 3. In Fig. 3, the proportions of seedling establishment were each calculated according to the proportion of the number of those individual seeds of the nine seeds in each container which sprouted their third leaves, and are each marked with the mean of proportions of seedling establishment in six containers under an identical condition and the standard error.

As shown in Fig. 3, under the conditions kept submerged at 20°C or 30°C, in which soil reduction is more likely to occur than in a normal growth environment, no seedling establishment was observed in a case where no potassium molybdate was added, whereas improvements in proportion of seedling establishment were confirmed in the range of molybdenum concentrations of 0.006 mM to 2.4 mM (which corresponds to 0.005 mM to 1.5 mM in a soil solution collected under negative pressure) in the resulting supernatant liquids above the samples of soil thus adjusted.

### (1-3: Inhibiting Effect of a Growth-improving Component on Sulfide Ions)

An inhibiting effect of a molybdenum-containing substance on sulfide ions was examined in relation to the degrees of generation of ferric sulfide in soil and the concentrations of molybdenum in soil solutions, and the results are shown in Fig. 4. The results shown in Fig. 4 were obtained from samples obtained in the same manner as in Example 1-2. Since methylene blue decolorizes in a reduced state, methylene blue weighing 0.1% of dry soil was added to each sample of soil so that a reduced state of the soil could be detected. The states of the samples of soil under 30°C condition two weeks after seeding are shown in Fig. 4. The supernatant liquids obtained after shaking the samples of soil thus adjusted had molybdenum concentrations shown in Fig. 4.

As shown in Fig. 4, a decolorized circle indicative of soil reduction appeared in the vicinity of the seed in each of the samples of soil. In a case where no aqueous solution of potassium molybdate was added (molybdenum concentration of 0 mM), a blacker circle indicative of the presence of ferric sulfide was observed in the soil, whereby sulfide ion generation and decreased seedling establishment were confirmed. It should be noted that it is conceivable that the paddy seed that survived in the molybdenum concentration of 0 mM may have not been affected by the sulfide ions, because the paddy seed had come out onto the surface of the soil.

Up to the molybdenum concentration of 0.06 mM in the supernatant liquids obtained after shaking the samples of soil thus adjusted, black circles were observed in the samples of soil. However, since an increase in molybdenum concentration led to lighter black, it was shown that the sulfide ions were effectively inhibited at a molybdenum concentration of 0.2 mM or higher. Further, as shown in Fig. 4, seedling establishment improved with an increase in molybdenum concentration of the supernatant liquids obtained after shaking the samples and the resultant inhibition of sulfide ions.

From these results, it can be said that an excellent seedling establishment improving effect is achieved in the range of molybdenum concentrations of 0.01 mM to 10 mM or, preferably, 0.05 mM to 3 mM in a soil solution.

### [Example 2: Solubility of Growth-improving Components]

### (2-1: Effect of Growth-improving Components on Inhibition of Sulfide Ion Generation and on the Proportion of Seedling Establishment)

Effects of various growth-improving components on plant growth were compared. The water solubility of molybdenum- and tungsten-containing substances (each in the form of a powder) was examined by obtaining information (https://www.siyaku.com/) provided by Wako Pure Chemical Industries, Ltd. and actually obtaining the substances other than metal tungsten (metal molybdenum and potassium phosphomolybdate made by Japan New Metals Co., Ltd. and the other substances purchased from Wako Pure Chemical Industries, Ltd.). The properties (water solubility and colors) of the molybdenum- and tungsten-containing substances are tabulated in Table 1.

**[Table 1]**

| Major Molybdenum-containing Substances and Tungsten-containing Substances | | | | |
|---|---|---|---|---|
| Name | Symbol | Color | Water solubility | Product name |
| Metal molybdenum | Mo | Black | Slightly soluble | Metal Molybdenum |
| Molybdenum oxide | MoO | Colorless | Slightly soluble | Molybdenum oxide (VI) |
| Molybdic acid | MoH | Colorless | Slightly soluble | Molybdic acid |
| Calcium molybdate | MoCa | Colorless | Sliq.htly soluble | Calcium molybdate |
| Magnesium molybdate | MoMg | Colorless | Slightly soluble | Magnesium molybdate |
| Ammonium molybdophosphate | MoPNH | Yellow | Slightly soluble | Triammonium 12-moblydo(VI)phosphate trihydrate |
| Potassium molybdophosphate | MoPK | Light yellow | Slightly soluble | Potassium phosphomolybdate |
| Ammonium molybdate | MoNH | Colorless | Readily soluble | Ammonium molybdate tetrahydrate |
| Sodium molybdate | MoNa | Colorless | Readily soluble | Sodium molybdate dihydrate |
| Potassium molybdate | MoK | Colorless | Readily soluble | Potassium molybdate |
| Molybdophosphoric acid | MoPH | Yellow | Readily soluble | 12-moblybdo(VI)phosphoric acid n-hydrate |
| Sodium molybdophosphate | MoPNa | Yellow | Readily soluble | Sodium phosphomolybdate n-hydrate |
| Molybdosilicic acid | MoSiH | Yellow | Readily soluble | Silicomolybdic acid n-hydrate |
| Metal tungsten | W | Black | Slightly soluble | Metal tungsten, |
| Tungsten oxide | WO | Light yellow | Slightly soluble | Tungsten oxide (VI) |
| Tungstic acid | WH | Yellow | Slightly soluble | Tungstic acid |
| Ammonium paratungstate | WNH | Colorless | Slightly soluble | Ammonium tungstate parapentahydrate |
| Ammonium tungstophosphate | WPNH | Colorless | Slightly soluble | Ammonium phosphotungstate trihydrate |

For the purpose of description in the drawings, Table 1 also shows symbols that represent the respective substances. As shown in Table 1, ammonium molybdate, sodium molybdate, potassium molybdate, molybdophosphoric acid, sodium molybdophosphate, and molybdosilicic acid are readily soluble in water. Meanwhile, metal molybdenum, molybdenum oxide, molybdic acid, calcium molybdate, magnesium molybdate, ammonium molybdophosphate, and potassium molybdophosphate are slightly soluble in water.

As for the tungsten-containing substances, only the slightly-soluble substances other than metal tungsten were obtained (each purchased from Wako Pure Chemical Industries, Ltd.) The properties (water solubility and colors) of the tungsten-containing substances are tabulated in Table 1.

Aqueous solutions of the readily-soluble molybdenum-containing substances (as indicated by "Readily soluble" in the column "Water solubility" in Table1) in varying concentrations were prepared, and the concentrations of molybdenum were measured by an inductively-coupled plasma emission spectrometer (ICP-AES, Varian VISTA AX). Fig. 5 shows the measured concentrations of molybdenum in relation to the calculated values of molybdenum concentration in cases where the readily-soluble molybdenum-containing substances completely dissolved. As shown in Fig. 5, the concentrations of the supernatants of these readily-soluble molybdenum-containing substances substantially coincide with the calculated values. This shows that in this range of concentrations, substantially the total amounts of the readily-soluble molybdenum-containing substances dissolve.

Similarly, aqueous solutions of the slightly-soluble molybdenum-containing substances (as indicated by "Slightly-soluble" in the column "Water solubility" in Table 1) in varying concentrations were prepared. Fig. 6 shows the analyzed values of molybdenum concentration in relation to the calculated values of molybdenum concentration in cases where the slightly-soluble molybdenum-containing substances completely dissolved. As shown in Fig. 6, the concentrations of the supernatants of these slightly-soluble molybdenum-containing substances are remarkably lower than the calculated values, and are expected to be kept low. In particular, ammonium molybdophosphate (MoPNH), which is a salt of a heteroacid, stops dissolving at a molybdenum amount of approximately 0.2 mM or higher, and can therefore be kept at an especially low concentration.

### (2-2: Effect of Readily-soluble Substances on the Proportion of Seedling Establishment)

Next, aqueous solutions of the readily-soluble molybdenum-containing substances, which had been found to be easily dissolved in water, were prepared in varying concentrations. The number of days for which sulfide ion generation was inhibited (period of time during which black pits indicative of ferric sulfide did not appear) and the proportion of seedling establishment were examined for cases where paddy seeds (branded as Hinohikari) germinated in the same manner as in Example 1-1 were soaked in the aqueous solutions for ten minutes and planted in samples of soil adjusted in the same manner as in Example 1-3 (albeit without the addition of a molybdenum-containing substance). The results are shown in Figs. 7 and 8.

As shown in Fig. 7, for most of the molybdenum-containing substances thus examined, an inhibiting effect on sulfide ion generation as compared with a case where paddy seeds are not soaked in a solution of a molybdenum-containing substance was brought about in the case of those ones of the soaking solutions which had a molybdenum concentration of 0.1 mM or higher. In the case of those ones of the soaking solutions which had a molybdenum concentration of 1 M to 2 M, sulfide ion generation was inhibited for fourteen days.

Meanwhile, as for the proportion of seedling establishment of paddy rice, no remarkable improvement in seedling establishment was observed except for ammonium molybdate (MoNH) or sodium molybdophosphate (MoPNa), as shown in Fig. 8. Further, even in the case of ammonium molybdate (MoNH) or sodium molybdophosphate (MoPNa), there was an improvement in proportion of seedling establishment only in the case of that one of the soaking solutions which had a molybdenum concentration of approximately 1 M, and there was a decrease in proportion of seedling establishment in the case of that one of the soaking solutions which had a molybdenum concentration of 2 M.

Thus, in these cases where the paddy seeds are soaked in the solutions of the readily-soluble molybdenum-containing substances, those ones of the solutions which have a molybdenum concentration of 0.1 M or higher are expected to bring about an inhibiting effect on sulfide ion generation. However, in this test environment, some of the solutions which have a molybdenum concentration of 0.1 M or higher did not show an improvement in seedling establishment. Such absence of an improvement in seedling establishment may be attributable to a disorder of the seeds. Therefore, in actual application, generation of sulfide ions and a disorder of a plant need only be both inhibited in consideration of the likelihood of generation of sulfide ions in the environment, the type of the plant, the growth stage of the plant, the type of the molybdenum-containing substance used, the concentration of the molybdenum-containing substance, the duration of the soaking treatment, etc. For example, even in the case of a comparatively high molybdenum concentration, a shortening of the duration of the soaking treatment can improve the growth of a plant without causing substantially any obstacle to the plant.

Next, the proportion of seedling establishment was examined by preparing solutions of the readily-soluble molybdenum-containing substances in a molybdenum concentration of 3 M and soaking paddy seeds in the solutions for one minute. The examination of the proportion of seedling establishment was carried out under the same conditions as the examination whose results are shown in Fig. 8, except for the molybdenum concentration and the duration of soaking. Further, prior to soaking in the molybdenum solutions, the paddy seeds had been germinated in the same manner as in Example 1-1. The results thus obtained are shown in Fig. 13.

As shown in Fig. 13, even in the case of higher molybdenum concentrations as compared with the examination whose results are shown in Fig. 8, a shortening of the duration of soaking to one minute led to an improvement in proportion of seedling establishment even in the case of molybdophosphoric acid (MoPH) and molybdosilicic acid (MoSiH). In particular, in the case of ammonium molybdate (MoNH) and sodium molybdophosphate (MoPNa), the proportion of seedling establishment improved to 50% to 60%.

That is, it was considered to be a particularly desirable method to soak seeds for approximately one minute in a solution of ammonium molybdate (MoNH) or sodium molybdophosphate (MoPNa), among these molybdenum-containing substances, in a molybdenum concentration of approximately 3 M.

Meanwhile, according to the results shown in Fig. 8, it was considered to be a particularly desirable method to soak seeds for approximately ten minutes in a solution of ammonium molybdate (MoNH) or sodium molybdophosphate (MoPNa) in a molybdenum concentration of approximately 1 M.

All this indicates (1) that for use in soaking treatment of seeds, ammonium molybdate (MoNH) or sodium molybdophosphate (MoPNa) is particularly preferable among the readily-soluble molybdenum-containing substances, (2) that the range of concentrations of approximately 1 M to approximately 3 M in terms of molybdenum is particularly preferable, and (3) that the range of the duration of the soaking treatment of approximately one minute to approximately ten minutes is particularly preferable, although the duration of the soaking treatment depends on the concentration of molybdenum.

### (2-3: Effect of Slightly-soluble Substances on Inhibition of Sulfide Ion Generation and on the Proportion of Seedling Establishment)

The water on slightly germinated seeds was lightly wiped off, and immediately after that, the seeds were put with (lightly covered with) various amounts of the slightly-soluble substances shown in Table 1. Before the water got completely dry, the seeds were planted in samples of soil adjusted in the same manner as in Example 2-2. The number of days for which sulfide ion generation was inhibited and the proportion of seedling establishment were examined. The results are shown in Figs. 9 and 10.

As shown in Fig. 9, for most of the molybdenum- and tungsten-containing substances thus examined, an inhibiting effect on sulfide ion generation as compared with a case where these substances were not added was brought about. In particular, in the case of molybdenum oxide (MoO), molybdic acid (MoH), ammonium molybdophosphate (MoPNH), tungsten oxide (WO), and ammonium tungstophosphate (WPNH), sulfide ion generation was inhibited for fourteen days by adding an amount of approximately 0.1 mmol/g (per dry seeds) in terms of molybdenum or tungsten. Meanwhile, as shown in Fig. 10, for most of the molybdenum- and tungsten-containing substances thus examined, improvements in proportion of seedling establishment were made by adding an amount of 0.05 mmol/g (per dry seed) or more in terms of molybdenum or tungsten.

### [Example 3: Decay-inhibiting Effect of Molybdenum-containing Substances]

The decay-inhibiting effect of molybdenum-containing substances in tank farming without soil was examined. The possibility of growth of paddy seeds in varying molybdenum concentrations and the effect of inhibiting the decay of paddy seeds in varying molybdenum concentrations were examined for each of the readily-soluble molybdenum-containing substances, namely ammonium molybdate (MoNH), sodium molybdate (MoNa), potassium molybdate (MoK), molybdophosphoric acid (MoPH), and sodium molybdophosphate (MoPNa). The results are shown in Table 2.

**[Table 2]**

| | Concentration of Molybdenum in Solution (M) | | | |
|---|---|---|---|---|
| | Soaking | | Ten-minute soaking | |
| | Possibility of growth | Inhibition of decay | Possibility of growth | Inhibition of decay |
| MoNH | 0.06 | <0.02 | 1< | 0.1 |
| MoNa | 0.03 | 0.1 | 1 < | 0.3 |
| MoK | 0.02 | 0.3 | 1 < | 0.5 |
| MoPH | 0.03 | <0.02 | 1 < | 0.1 |
| MoPNa | <0.02 | <0.02 | 1 < | 0.1 |

The left column "Soaking" in Table 2 indicates the results obtained by leaving paddy seeds soaked for two weeks in various molybdenum-containing substance solutions kept at 30°C. The right column "Ten-minute soaking" in Table 2 indicates the results obtained by withdrawing paddy seeds soaked only for ten minutes in various molybdenum-containing substance solutions and then leaving the paddy seeds soaked for two weeks in water kept at 30°C. In both cases, the results were obtained simply by soaking the seeds in the solutions or water without using soil. As to a concentration at which sheath leaf elongation was observed, it was determined that growth is possible, and as to a concentration at which the water did not rot and there was no rotten smell, it was determined that decay is inhibited. It should be noted that each of the above-indicated concentrations is a concentration at which it was determined that growth is possible or that decay is inhibited, but does not necessarily mean that growth is impossible at a concentration equal to or higher than that concentration or that decay is not inhibited at a concentration lower than or equal to that concentration. Further, a concentration with a greater-than or less-than sign is an upper or lower limit at which the examination was carried out, and indicates that the range may be widened by carrying out the examination at a concentration higher or lower than that concentration.

In the case of two-week soaking in the solutions of the molybdenum-containing substances, there were small differences between the concentrations at which growth is possible and the concentrations at which decay is inhibited. Therefore, it was considered difficult to grow a plant in a concentration at which decay can be inhibited. Meanwhile, in the case of ten-minute soaking, there are great differences between the concentrations at which growth is possible and the concentrations at which decay is inhibited. Therefore, it was possible to grow the paddy seeds while inhibiting decay.

Similarly, the decay-inhibiting effect and the possibility of growth by slightly-soluble molybdenum-containing substances and slightly-soluble tungsten-containing substances were examined for seeds prepared in the same manner as in Example 2-3 and left soaked for two weeks in water at 30°C. The possibility of growth and the inhibition of decay were determined in the same manner as above. Table 3 shows results of examination of molybdenum oxide (MoO), molybdic acid (MoH), calcium molybdate (MoCa), ammonium molybdophosphate (MoPNH), tungsten oxide (WO), tungstic acid (WH), ammonium paratungstate (WNH), and ammonium tungstophosphate (WPNH).

**[Table 3]**

| Amount of molybdenum or tungsten added to seed (mmol g⁻¹) | | |
|---|---|---|
| | Possibility of growth | Inhibition of decay |
| MoO | 0.07 | <0.01 |
| MoH | 2< | <0.02 |
| MoCa | 1 | 0.3 |
| MoPNH | 1< | <0.01 |
| WO | 1< | 1< |
| WH | 1< | 1< |
| WNH | 0.3 | <0.3 |
| WPNH | 1< | 1< |

As shown in Table 3, the slightly-soluble molybdenum-containing substances exhibited the decay-inhibiting effect at very low concentrations, and also allowed the paddy seeds to grow.

### [Example 4: Effect of a Growth-improving Component on Seedling Establishment of Rice]

### (4-1)

On the basis of the above examples, ammonium molybdophosphate, which is slightly soluble, which is a salt of a heteroacid, and which has a decay-inhibiting effect at low concentrations, was considered to be suitable as a growth-improving component. In order to grasp the improving effect of ammonium molybdophosphate on seedling establishment, seedling establishment of seeds to which the compound had been added was examined in detail. First, samples of soil and germinated paddy seeds were prepared in the same manner as in Example 1-2 (albeit without the addition of a molybdenum-containing substance). The germinated paddy seeds were soaked for one minute in a tenfold diluted solution of a commercially available laundry starch (manufactured by Rocket Soap Co., Ltd.; My Laundry Starch) containing approximately a little less than 10% by weight of polyvinyl alcohol, centrifuged at 1000 rpm for removal of the extra solution, and, immediately after that, lightly covered with different amounts of ammonium molybdophosphate, whereby seeds with different amounts of ammonium molybdophosphate were prepared. The seeds were left for a while, planted in the same manner as in Example 1-2, and left at rest in an incubator at 30°C. It should be noted that six containers were allotted for each condition and the results shown in Fig. 11 are each marked with the mean and the standard error.

As shown in Fig. 11, the addition of ammonium molybdophosphate in a molybdenum amount of 0.02 mmol or more per gram of dry seeds led to improvements in proportion of seedling establishment as compared with the case where no ammonium molybdophosphate was added (in an amount of 0 mmol/g). With the addition ammonium molybdophosphate in a molybdenum amount of 0.5 mmol/g or more, the proportion of seedling establishment improved to nearly 80%.

### (4-2)

In order to grasp the improving effect on seedling establishment of slightly-soluble molybdenum- and tungsten-containing substances considered on the basis of the above examples to be suitable as growth-improving components, seedling establishment of seeds to which these substances had been added were examined in detail.

The examination was carried out in the same manner as in Example 4-1, except that the seeds were lightly covered with metal molybdenum (Mo), molybdenum oxide (MoO), molybdic acid (MoH), magnesium molybdate (MoMg), calcium molybdate (MoCa), ammonium molybdophosphate (MoPNH), potassium molybdophosphate (MoPK), tungstic acid (WH), or ammonium tungstophosphate (WPNH), instead of ammonium molybdophosphate. Seeds lightly covered with ammonium molybdophosphate under the same conditions as in Example 4-1 were also examined.

The seeds thus prepared were left for a while, planted in the same manner as in Example 4-1, and left at rest at 30°C. It should be noted that six containers were allotted for each condition and the results shown in Figs. 14 through 15b are each marked with the mean and the standard error. It should also be noted that in each of Figs. 14 through 15b, the horizontal axis represents the number of moles (mmol) of molybdenum or tungsten that adhered per gram of dry seed. In each of Figs. 14 through 15b, the dots correspond to the numbers of moles of 0, 0.02, 0.05, 0.1, 0.2, 0.5, 1, and 2 mmol, starting from the left.

As shown in Figs. 14 through 15b, the addition of any one of the molybdenum- or tungsten-containing substances in a molybdenum or tungsten amount of 0.02 mmol or more per gram of dry seed led to improvements in proportion of seedling establishment as compared with the case where no molybdenum- or tungsten-containing substance was added (in an amount of 0 mmol/g).

### (4-3)

Among the molybdenum-containing substances used in Example 4-2, molybdenum oxide (MoO) and ammonium molybdophosphate (MoPNH) were further examined in detail by (1) leaving the planted seeds at rest at 20°C instead of 30°C, (2) using dry seeds instead of germinated unhusked rice, planting the seeds, and leaving the seeds at rest at 20°C or 30°C. As in Example 4-2, six containers were allotted for each condition, and the proportion of seedling establishment and the standard error were examined. The results as shown in Fig. 16 (germinated seeds, left at rest at 20°C), Fig. 17 (dry seeds, left at rest at 30°C), and Fig. 18 (dry seeds, left at rest at 20°C). It should be noted that in each of Figs. 16 through 18, the horizontal axis represents the number of moles (mmol) of molybdenum that adhered per gram of dry seed. In each of Figs. 16 through 18, the dots correspond to the numbers of moles of 0, 0.02, 0.05, 0.1, 0.2, 0.5, 1, and 2 mmol, starting from the left.

As shown in Figs. 16 through 18, the addition of molybdenum brought about an effect regardless of whether the seeds had been germinated or at which temperature the seeds had been left at rest. In particular, even at a temperature of 20°C, which is comparatively close to a normal temperature condition for seedling establishment, a remarkable improving effect on seedling establishment was observed.

### (4-4)

Further, seeds germinated (germinated unhusked rice) in the same manner as in Example 1-2 were coated with a mixture of clay (Neolite Kosan K.K.; Taihei DL Clay) the same weight per dry seeds and molybdenum oxide (MoO) or ammonium molybdophosphate (MoPNH) with use of a twofold diluted solution of a commercially available laundry starch (manufactured by Rocket Soap Co., Ltd.; My Laundry Starch) containing approximately 10% by weight of polyvinyl alcohol. The resulting seeds were planted and grown under the same conditions as in Example 4-1. As in Example 4-1, six containers were allotted for each condition, and the proportion of seedling establishment and the standard error were examined. The results are shown in Fig. 19a. It should be noted that in Fig. 19a, the horizontal axis represents the number of moles (mmol) of molybdenum that adhered per gram of dry seed. In Fig. 19a, the dots correspond to the numbers of moles of 0, 0.02, 0.05, 0.1, 0.2, 0.5, 1, and 2 mmol, starting from the left.

As shown in Fig. 19a, in the case of seeds coated with a mixture of clay and a molybdenum-containing substance, even the addition of molybdenum in a small amount of 0.02 mmol/g led to an improvement in seedling establishment (see Fig. 14 for comparison). A possible reason for this is that because the clay physically inhibited molybdenum from being dissolved or diffused, the concentration of molybdenum in the vicinity of the seeds was held high even with a small amount of molybdenum.

### (4-4a)

Non-germinated dry seeds were coated by using a mixture of reduced iron (Wako Pure Chemical Industries, Ltd., first class), half the weight of dry seeds, and molybdenum oxide (MoO), ammonium molybdophosphate (MoPNH), or potassium molybdophosphate (MoPK) by misting the seeds with water. The resulting seeds were allowed to spend time in a sufficiently wet condition so that the iron rusted, and then allowed to further spend overnight. The seeds thus coated were planted at a depth of 15 mm in the soil at 30°C in the same manner as in Example 4-1. Six containers were allotted for each condition, and the proportion of seedling establishment and the standard error were examined. The results are shown in Fig. 19b. It should be noted that in Fig. 19b, the horizontal axis represents the number of moles (mmol) of molybdenum that adhered per gram of dry seed. In Fig. 19b, the dots correspond to the numbers of moles of 0, 0.02, 0.05, 0.1, 0.2, 0.5, 1, and 2 mmol, starting from the left. As for molybdenum oxide (MoO), the experiment was further conducted at 5 and 10 mmol.

As shown in Fig. 19b, in the case of seeds coated by using a mixture of reduced iron and a molybdenum-containing substance, namely ammonium molybdophosphate (MoPNH) or potassium molybdophosphate (MoPK), the addition of molybdenum in an amount of 0.1 mmol/g or more led to improvements in seedling establishment. Meanwhile, in the case of molybdenum oxide (MoO), the addition of molybdenum in an amount of 0.5 mmol/g or more led to improvements in seedling establishment. In the case of a mixture of reduced iron and a molybdenum-containing substance, an excess of molybdenum was less likely to inhibit growth as compared with the case of a molybdenum compound alone.

### (4-4b)

Further, non-germinated dry seeds were coated with calcium peroxide (Wako Pure Chemical Industries, Ltd., product containing 25% by weight of calcium peroxide) alone or with powder mixtures of varying amounts of the calcium peroxide and 0.1 mmol/g of molybdenum oxide (MoO) per gram of dry seed by misting the seeds with water. The seeds thus coated were planted at a depth of 15 mm in the soil at 30°C in the same manner as in Example 4-1. Six containers were allotted for each condition, and the proportion of seedling establishment and the standard error were examined. The results are shown in Fig. 19c. It should be noted that in Fig. 19c, the horizontal axis represents the actual weight ratios of 25 wt% calcium peroxide that adhered with respect to the weight of dry seed. In Fig. 19c, the dots correspond to the actual weight ratios of 25 wt% calcium peroxide of 0, 0.01, 0.02, 0.05, 0.1, 0.2, 0.5, and 1 time, starting from the left.

As shown in Fig. 19c, in the absence of molybdenum oxide, the proportion of seedling establishment decreased to 20% or lower when the weight of 25 wt% calcium peroxide was 0.1 or less time as great as the weight of dry seed. However, the mixture of molybdenum oxide allowed the proportion of seedling establishment to be maintained at 40% or higher even when the weight of 25 wt% calcium peroxide was 0.1 or less time as great as the weight of dry seed. Further, in a case where the weight of 25 wt% calcium peroxide was 0.2 to 0.5 time as great as the weight of dry seed, the mixture of molybdenum oxide resulted in a higher proportion of seedling establishment than the absence of molybdenum oxide.

### (4-5)

Dry paddy seeds (branded as Hinohikari) were prepared. Then, the dry seeds were coated with a mixture of clay (Neolite Kosan K.K.; Taihei DL Clay) half the weight of dry seeds and a 0.1 mmol/g molybdenum amount of molybdenum oxide (MoO) or ammonium molybdophosphate (MoPNH) with use of a twofold diluted solution of a commercially available laundry starch (manufactured by Rocket Soap Co., Ltd.; My Laundry Starch) containing approximately 10% by weight of polyvinyl alcohol. Separately, dry seeds (WITHOUT MATERIAL) coated solely with clay containing no molybdenum were also prepared. Furthermore, dry seeds (Cal) coated with an oxygen generating agent (Calper Powder 16, Hodogaya UPL Co., Ltd.) the same weight per dry seeds were also prepared. Calper Powder 16 is an oxygen generating agent composed mainly of calcium peroxide.

These dry seeds were planted in puddled soil in a paddy field in Chikugo City, Fukuoka Prefecture, by using a simultaneous puddling and planting point sowing machine. By preparing the seeds as described above and planting them by using a point sowing machine, the amount of seeding per unit area of the paddy field can be substantially uniformed. It should be noted that prior to soil puddling, 4 g/m² of ammonium sulfate as nitrogen and potassium sulfate containing potassium equivalent to 8 g/m² as potassium oxide had been applied to the paddy field. After seeding, the seeds were kept submerged without draining the water. Fig. 22 shows the appearance of the paddy field approximately one month after seeding.

As shown in Fig. 22, the use of molybdenum oxide or ammonium molybdophosphate led to obvious improvements in seedling establishment as compared to "WITHOUT MATERIAL" and the "use of the oxygen generating agent (Cal)". In particular, the use of ammonium molybdophosphate brought about the most remarkable improving effect on seedling establishment.

### [Example 5: Effect of a Growth-improving Component on Seedling Establishment of Barley and Soybean]

As in Example 4-1, ammonium sulfate in an equivalent amount of 10 g/m² in terms of nitrogen and potassium chloride equivalent to 5 g/m² of potassium as potassium oxide were added as a solution to paddy humid soil, on the condition that the weight of dry soil is 100 kg/m². The soil was placed into each container (in the shape of a cylinder approximately 7 cm in diameter) in an amount equivalent to 100 g of dry soil, shaken for approximately one hour, and left at rest for two days at 4°C. It should be noted, however, that the soil-to-liquid ratio was 0.7. On this condition, the soil surface became substantially as high as the water surface. Barley seeds (branded as Nishinochikara) and soybean seeds (branded as Fukuyutaka) not subjected to treatment such as soaking in advance were soaked in water for one minute. Immediately after the extra water was removed, the seeds were put with a 0.2 mol molybdenum amount of ammonium molybdophosphate (purchased from Wako Pure Chemical Industries, Ltd.) per gram of dry seed. The seeds were then half-buried in the samples of soil. After that, at a constant temperature of 20°C and a constant temperature of 30°C, the water level was kept by adding water to such an extent that the seeds were slightly covered with water. Six containers were allotted for each condition, and the proportion of seedling establishment (proportion of individual plants that survived) was measured after two weeks. The results are shown in Fig. 12.

As shown in Fig. 12, in the case of barely seeds and soybean seeds, too, the addition of ammonium molybdophosphate led to improvements in proportion of seedling establishment.

### [Example 6: Effect of a Growth-improving Component on Seedling Establishment of Barley and Wheat]

### (6-1)

As in Example 4-1, ammonium sulfate in an equivalent amount of 10 g/m² in terms of nitrogen and potassium chloride equivalent to 5 g/m² of potassium as potassium oxide were added as a solution to paddy humid soil in terms of 100 kg/m² of dry soil with a soil-to-liquid ratio of 0.7. The soil was placed into each container (in the shape of a cylinder approximately 7 cm in diameter) in an amount equivalent to 100 g of dry soil. The soil surface was flattened by giving it a slight press with a flat plate. Then, the soil was left at rest for one day at 4°C. Next, barley seeds (branded as Nishinochikara) and wheat seeds (branded as Chikugoizumi) not subjected to treatment such as soaking in advance were soaked for one minute in a tenfold diluted solution of a commercially available laundry starch (manufactured by Rocket Soap Co., Ltd.; My Laundry Starch) containing approximately a little less than 10% by weight of polyvinyl alcohol, centrifuged at 1000 rpm for removal of the extra solution, and, immediately after that, put with 0.01 mmol to 0.5 mmol molybdenum amounts of molybdenum oxide (MoO, purchased from Wako Pure Chemical Industries, Ltd.) or ammonium phosphomolybdate (MoPNH, Wako Pure Chemical Industries, Ltd.) per gram of dry seed. The seeds were then half-buried in the soil. After that, at a constant temperature of 20°C, the water level was kept by adding water to such an extent that the seeds were slightly covered with water. Six containers were allotted for each condition, and the proportion of seedling establishment (proportion of individual plants that survived) was measured after two weeks. The results for barley are shown in Fig. 20a, and the results for wheat are shown in Fig. 20b. It should be noted that in each of Figs. 20a and 20b, the horizontal axis represents the number of moles (mmol) of molybdenum that adhered per gram of dry seed. In each of Figs. 20a and 20b, the dots correspond to the numbers of moles of 0, 0.01, 0.02, 0.05, 0.1, 0.2, and 0.5 mmol, starting from the left. It should be noted that the open symbols in each of Figs. 20a and 20b represent the proportions of seedling establishment of seeds cultivated in a field without being submerged in water.

As shown in Figs. 20a and 20b, in the case of barely seeds and wheat seeds, too, the addition of molybdenum oxide or ammonium phosphomolybdate led to improvements in proportion of seedling establishment.

### (6-2)

Soil was adjusted in the same manner as in Example 6-1. Barley seeds and wheat seeds were lightly covered with molybdenum oxide (MoO), molybdic acid (MoH), ammonium molybdophosphate (MoPNH), or potassium molybdophosphate (MoPK) in an amount of 0.5 mmol in terms of molybdenum per gram of dry seed in the same manner as in Example 6-1. As a control group, untreated seeds (NONE) lightly covered with no substance were also prepared. Barley seeds lightly covered with tungsten oxide (WO) in 0.5 mmol in terms of tungsten per gram of dry seed were also prepared. Barley seeds and wheat seeds lightly covered with ammonium tungstophosphate (WPNH) in 0.5 mmol in terms of tungsten per gram of dry seed were also prepared. These seeds were planted in the soil in the same manner as in Example 6-1, and then buried so that the upper edge of each seed was at the same height as the soil surface. After that, the water level was kept by adding water so that the surface water was 15 mm high. After three days, the surface water was sucked up with a pipette for removal. After seeding, the seeds were controlled at 20°C as in Example 6-1, except for the water level. Six containers were allotted for each condition, and the proportion of seedling establishment (proportion of individual plants that survived) was measured after two weeks. The results for barley are shown in Fig. 20c, and the results for wheat are shown in Fig. 20d.

As shown in Figs. 20c and 20d, most of the barley and wheat seeds lightly covered with the molybdenum compounds or the tungsten compounds exhibited improvements in proportion of seedling establishment over the untreated seeds.

### [Example 6a: Effect of Growth-improving Components on Seedling Establishment of Soybean]

### (6a-1)

Soil was prepared in the same manner as in Example 6-1. Next, soybean seeds (branded as Fukuyutaka) not subjected to treatment such as soaking in advance were soaked for one minute in a tenfold diluted solution of a commercially available laundry starch (manufactured by Rocket Soap Co., Ltd.; My Laundry Starch) containing approximately a little less than 10% by weight of polyvinyl alcohol. Then, the seeds were spin-dried for thirty seconds in a commercially available washing machine for removal of the extra water. Immediately after that, the seeds were put with 0.01 mmol to 0.5 mmol molybdenum amounts of molybdenum oxide (MoO, purchased from Wako Pure Chemical Industries, Ltd.) or ammonium phosphomolybdate (MoPNH, Wako Pure Chemical Industries, Ltd.) per gram of dry seed. These seeds were buried so that the upper edge of each seed was at the same height as the soil surface. In an artificially-lit (amount of light 0.4 mmol/m²/s, lit for twelve hours per day) room at 25°C, water was added immediately after seeding so that the surface water was 15 mm high. After two days, the surface water was sucked up with a pipette for removal. Six containers were allotted for each condition, and the proportion of seedling establishment (proportion of individual plants that survived) was measured two weeks after seeding. The results are shown in Fig. 20e. It should be noted that in Fig. 20e, the horizontal axis represents the number of moles (mmol) of molybdenum that adhered per gram of dry seed. In Fig. 20e, the dots correspond to the numbers of moles of 0 (UNTREATED), 0.01, 0.02, 0.05, 0.1, 0.2, and 0.5 mmol, starting from the left. It should be noted that the open symbols in Fig. 20e represent the proportions of seedling establishment of seeds cultivated in a field without being submerged in water.

As shown in Fig. 20e, in the case of soybean seeds, too, the addition of molybdenum oxide or ammonium phosphomolybdate led to improvements in proportion of seedling establishment over the untreated seeds.

### (6a-2)

Soil was prepared in the same manner as in Example 6-1. Soybean seeds were lightly covered with molybdenum oxide (MoO), molybdic acid (MoH), ammonium molybdophosphate (MoPNH), potassium molybdophosphate (MoPK), tungstic acid (WH), or ammonium tungstophosphate (WPNH) in an amount of 0.5 mmol in terms of molybdenum or tungsten per gram of dry seed in the same manner as in Example 6a-1. As a control group, untreated seeds (NONE) lightly covered with no substance were also prepared. After these seeds had been planted in the soil in the same manner as in Example 6a-1, the water level was kept so that the surface water was 15 mm high, and the temperature was kept at 20°C. After two days, the surface water was sucked up with a pipette for removal. Furthermore, the temperature was kept at 20°C. Six containers were allotted for each condition, and the proportion of seedling establishment (proportion of individual plants that survived) was measured after two weeks. The results are shown in Fig. 20f.

As shown in Fig. 20f, most of the soybean seeds lightly covered with the molybdenum compounds or the tungsten compounds exhibited improvements in proportion of seedling establishment over the untreated seeds.

### [Example 6b: Effect of Growth-improving Components on Seedling Establishment of Buckwheat]

Soil was adjusted in the same manner as in Example 6-1. Buckwheat seeds (branded as Sachiizumi) not subjected to treatment such as soaking in advance were soaked for one minute in a tenfold diluted solution of a commercially available laundry starch (manufactured by Rocket Soap Co., Ltd.; My Laundry Starch) containing approximately a little less than 10% by weight of polyvinyl alcohol. Then, the buckwheat seeds were centrifuged at 1000 rpm for removal of the extra solution. Immediately after that, the buckwheat seeds were lightly covered with molybdenum oxide (MoO), molybdic acid (MoH), ammonium molybdophosphate (MoPNH), or tungstic acid (WH) in an amount of 0.5 mmol in terms of molybdenum or tungsten per gram of dry seed. As a control group, untreated seeds (NONE) lightly covered with no substance were also prepared. These seeds were buried so that the upper edge of each seed was at the same height as the soil surface. In an artificially-lit (amount of light 0.4 mmol/m²/s, lit for twelve hours per day) room at 25°C, water was added two days after seeding so that the surface water was 15 mm high. One day after that, the surface water was sucked up with a pipette for removal. Six containers were allotted for each condition, and the proportion of seedling establishment (proportion of individual plants that survived) was measured two weeks after seeding.

As shown in Fig. 20g, most of the buckwheat seeds lightly covered with the molybdenum compounds or the tungsten compound exhibited improvements in proportion of seedling establishment over the untreated seeds.

### [Example 7: Effect of a Growth-improving Component on Avoidance of Wet Damage to Barley]

To a poorly-drained paddy field in Chikugo City, Fukuoka Prefecture, 1.2 t/10a of cow manure and ammonium sulfate in an equivalent amount of 6 kg/10a in terms of nitrogen were applied. In November 2009, 9 kg/10a of barley seed (branded as Nishinochikara) was planted. In February 2010, the paddy field was partitioned by corrugated plates into eight areas 50 cm × 70 cm each. On February 19, 2010 or March 17, 2010, ammonium molybdophosphate was applied in equivalents amounts of 0, 0.03, 0.1, 0.3 mol/m² in terms of molybdenum. On May 11, 2010, the shoots of the barley in the areas partitioned from one another by the corrugated plates were harvested, and the dry weight was obtained. The results are shown in Fig. 21.

Since the paddy field in which the testing was conducted was prone to store water, the growth of barley was remarkably bad. As shown in Fig. 21, the dry weight of the shoots at harvest time was approximately 0.1 kg/m² when molybdenum had not been applied. Application of more molybdenum tended to lead to an increase in dry weight of the shoots. In particular, the application of molybdenum in approximately 0.3 mol/m² in February led to a dry weight of approximately 0.25 kg/m² of the shoots at harvest time. All this indicates that in the case of cultivation of a crop, such as barley, which is weak against wet damage, application of molybdenum to a field reduces wet damage to the crop.

### Industrial Applicability

The present invention can be widely applied to the field of agriculture in which crops are cultivated and, in particular, to rice cropping.

## Claims

1. A plant growth-improving agent comprising a growth-improving component that increases a concentration of an oxoanion in an area around a plant, the oxoanion being heavier than a sulfate ion and containing four oxygen atoms.

2. The plant growth-improving agent as set forth in claim 1, wherein the growth-improving component is selected from the group consisting of a molybdenum-containing substance, a tungsten-containing substance, a chromium-containing substance, a selenium-containing substance, and a tellurium-containing substance, each of which supplies an oxoanion.

3. The plant growth-improving agent as set forth in claim 1, wherein the growth-improving component is selected from the group consisting of a molybdenum compound, a tungsten compound, a chromium compound, a selenium compound, and a tellurium compound, each of which supplies an oxoanion.

4. The plant growth-improving agent as set forth in any one of claims 1 to 3, said plant growth-improving agent being used for the plant, the plant being a plant that is cultivated under such conditions that at least part of its body is at least temporarily submerged.

5. The plant growth-improving agent as set forth in claim 4, wherein the plant is a poaceous plant.

6. The plant growth-improving agent as set forth in any one of claims 1 to 5, said plant growth-improving agent improving seedling establishment of the plant.

7. The plant growth-improving agent as set forth in any one of claims 1 to 6, wherein the growth-improving component is slightly soluble in water.

8. The plant growth-improving agent as set forth in claim 3, wherein the growth-improving component is a molybdenum component or a tungsten compound, each of which supplies an oxoanion.

9. A seed onto a surface of which or into an inner part of which a plant growth-improving agent as set forth in any one of claims 1 to 8 has been applied.

10. A method for improving plant growth, comprising a cultivating step of growing a plant in the presence of a growth-improving component that increases a concentration of an oxoanion in an area around the plant, the oxoanion being heavier than a sulfate ion and containing four oxygen atoms.

11. The method as set forth in claim 10, wherein the growth-improving component is selected from the group consisting of a molybdenum-containing substance, a tungsten-containing substance, a chromium-containing substance, a selenium-containing substance, and a tellurium-containing substance, each of which supplies an oxoanion.

12. The method as set forth in claim 10, wherein the growth-improving component is selected from the group consisting of a molybdenum compound, a tungsten compound, a chromium compound, a selenium compound, and a tellurium compound, each of which supplies an oxoanion.

13. The method as set forth in any one of claims 10 to 12, wherein the growth-improving component is made present by adding a plant growth-improving agent as set forth in any one of claims 1 to 8 to a solution in which the plant is grown, to a soil in which the plant is grown, to a substitute for the solution, or to a substitute for the soil.

14. The method as set forth in claim 13, wherein the plant growth-improving agent is made present in the solution, a solution of the soil, a solution of the substitute for the solution, or a solution the substitute for the soil in a range of 0.01 mM to 10 mM in terms of an oxoanion being heavier than a sulfate ion and containing four oxygen atoms.

15. The method as set forth in claim 13, wherein when an oxidation-reduction potential as normalized at a pH of 7 is at least temporarily 0 mV or lower in at least part of the solution, the soil, the substitute for the solution, or the substitute for the soil, the plant growth-improving agent is added to the solution, the soil, the substitute for the solution, or the substitute for the soil.

16. The method as set forth in any one of claims 10 to 12, further comprising a seeding step of planting a seed as set forth in claim 9 in a solution in which the plant is grown, in a soil in which the plant is grown, in a substitute for the solution, or in a substitute for the soil, the seeding step being executed prior to the cultivating step, the growth-improving component being made present by the seeding step.

17. The method as set forth in any one of claims 10 to 15, wherein the cultivating step is executed in at least either a period of seedling establishment or a period of time in which at least part of a body of the plant is temporarily submerged.

18. A method for improving plant growth, comprising the step of adding, to a solution in which a plant is grown, to a soil in which the plant is grown, to a substitute for the solution, or to a substitute for the soil, a material that generates or solubilizes an oxoanion from a molybdenum-containing substance, a tungsten-containing substance, a chromium-containing substance, a selenium-containing substance, or a tellurium-containing substance contained in the solution, in the soil, in a the substitute for the solution, or in the substitute for the soil.
